(19) Europäisches Patentamt
European Patent Office
Office européen des brevets

(11) **EP 4 549 411 A1**

(12) **EUROPEAN PATENT APPLICATION**
published in accordance with Art. 153(4) EPC

(43) Date of publication:
**07.05.2025 Bulletin 2025/19**

(21) Application number: 23831405.8

(22) Date of filing: **26.06.2023**

(51) International Patent Classification (IPC):
*C03C 10/12* (2006.01)    *C03C 21/00* (2006.01)

(52) Cooperative Patent Classification (CPC):
C03C 10/00; C03C 21/00

(86) International application number:
**PCT/JP2023/023677**

(87) International publication number:
**WO 2024/004965 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.06.2022 JP 2022106563**

(71) Applicant: AGC INC.
Chiyoda-ku,
Tokyo 1008405 (JP)

(72) Inventors:
• YAMAZAKI, Yoshiki
  Tokyo 100-8405 (JP)
• AKIBA, Shusaku
  Tokyo 100-8405 (JP)
• NAGANO, Mikio
  Tokyo 100-8405 (JP)
• IMAKITA, Kenji
  Tokyo 100-8405 (JP)
• KANEHARA, Kazuki
  Tokyo 100-8405 (JP)

(74) Representative: Müller-Boré & Partner
Patentanwälte PartG mbB
Friedenheimer Brücke 21
80639 München (DE)

(54) **CRYSTALLIZED GLASS, CHEMICALLY TOUGHENED GLASS, AND METHOD FOR PRODUCING CRYSTALLIZED GLASS**

(57) The present invention provides crystallized glass that achieves excellent strength by chemical toughening, and that is excellent in both strength when dropped and transparency. The present invention relates to crystallized glass that comprises a lithium disilicate type crystal and/or a solid solution crystal thereof, a virgilite type crystal and/or a solid solution crystal thereof, and a residual glass phase, and that has a fracture toughness value $K_{IC}$ of not less than 1.0 MPa·m$^{0.5}$ and a haze value of not more than 0.8% based on a thickness of 0.7 mm.

*FIG. 3*

Crack growth rate (m/s) vs. stress intensity factor $K_I$ (MPa·m$^{0.5}$); $y = 4E{-}37e^{64.125x}$; $y = 8E{-}218e^{416.96x}$; Region III; SERIES1, SERIES2, EXPONENT (SERIES 1), EXPONENT (SERIES 2)

EP 4 549 411 A1

**Description**

TECHNICAL FIELD

The present invention relates to a glass ceramic, a chemically strengthened glass, and a method for producing a glass ceramic.

BACKGROUND ART

A cover glass of a mobile terminal or the like is required to have strength enough not to easily crack even when the mobile terminal is dropped, and therefore, a chemically strengthened glass is widely used therefor. The chemically strengthened glass is a glass obtained by immersing a glass in a molten salt such as sodium nitrate to cause ion exchange between an alkali ion contained in the glass and an alkali ion contained in the molten salt and having a larger ion radius, and thereby forming a compressive stress layer on a surface portion of the glass.

A glass ceramic is obtained by precipitating a crystal in the glass, and is harder and less likely to be scratched than an amorphous glass containing no crystal. In addition, glass ceramic which is able to be chemically strengthened can have high strength while preventing fracturing as compared with an amorphous glass.

In addition, the cover glass of a mobile terminal or the like is often required to have high transparency in order to improve the visibility of a display. That is, in the case of the cover glass of a mobile terminal or the like, there are cases where both the strength, especially drop strength, and the transparency are required.

For example, Patent Literature 1 discloses a glass ceramic suitable for a protective member for portable electronic devices and optical devices, particularly for a back cover.

Patent Literature 2 discloses a glass ceramic including 30 wt% to 65 wt% of a first crystal phase of lithium disilicate and 20 wt% to 60 wt% of a second crystal phase of $\beta$-spodumene. The glass ceramics disclosed in Patent Literature 1 and Patent Literature 2 are both a glass ceramic which is able to be chemically strengthened.

CITATION LIST

PATENT LITERATURE

Patent Literature 1: JP2021-509658A
Patent Literature 2: JP2016-529201A

SUMMARY OF INVENTION

TECHNICAL PROBLEM

However, in the glass ceramics which are able to be chemically strengthened disclosed in Patent Literature 1 and Patent Literature 2, there are cases where it is still insufficient to achieve both the drop strength and the transparency. That is, there is a demand for a glass ceramic which is able to be chemically strengthened and is excellent in these properties.

In view of the above problems, an object of the present invention is to provide a glass ceramic that is excellent in strength by chemical strengthening and excellent in both drop strength and transparency. In addition, another object of the present invention is to provide a chemically strengthened glass excellent in both drop strength and transparency. A still another object of the present invention is to provide a method for producing the above glass ceramic.

SOLUTION TO PROBLEM

The inventors of the present invention have found that the above problems can be solved by using a glass ceramic containing a predetermined crystal and having a fracture toughness value $K_{IC}$ being a predetermined value or more and a haze value being a predetermined value or less. Thus, the present invention has been completed.

That is, the present invention relates to the following 1 to 22.

1. A glass ceramic including:

at least one of a lithium disilicate type crystal and a solid solution crystal thereof;
at least one of a virgilite type crystal and a solid solution crystal thereof; and

a residual glass phase, in which
a fracture toughness value $K_{IC}$ is 1.0 MPa·m$^{0.5}$ or more, and
a haze value in terms of a thickness of 0.7 mm is 0.8% or less.

2. A glass ceramic including:

at least one of a lithium disilicate type crystal and a solid solution crystal thereof;
at least one of a β-spodumene type crystal and a solid solution crystal thereof; and
a residual glass phase, in which
a fracture toughness value $K_{IC}$ is 1.2 MPa·m$^{0.5}$ or more, and
a haze value in terms of a thickness of 0.7 mm is 2.0% or less.

3. The glass ceramic according to the above 1 or 2, in which

when a $K_I$-v curve showing a relationship between a stress intensity factor $K_I$ (unit: MPa·m$^{0.5}$) and a crack growth rate v (unit: m/s) of the glass ceramic is measured,
the $K_I$-v curve has Region I, Region II, and Region III from a region where the crack growth rate v is small,
the $K_I$-v curve has an inflection point in the Region III, and
when the crack growth rate v is fitted to the stress intensity factor $K_I$ using an exponential function, a ratio (x_Region III-2/x_region III-1) of an exponent value (x_Region III-2) of the exponential function on a side of Region III-2 to an exponent value (x_Region III-1) of the exponential function on a side of Region III-1 is less than 0.25,
provided that the Region III-1 is a region where the crack growth rate v is smaller and the Region III-2 is a region where the crack growth rate v is larger in the Region III with the inflection point as a boundary.

4. A chemically strengthened glass including a compressive stress layer at a surface thereof, in which
the chemically strengthened glass is the glass ceramic according to the above 3.
5. The glass ceramic according to the above 1 or 2, in which

a composition of a base glass includes, in mol% in terms of oxides,

65% to 75% of $SiO_2$,
23% to 25% of $Li_2O$,
4% to 8% of $Al_2O_3$,
0.5% to 2.5% of $P_2O_5$,
0.6% to 2% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 5% or less with respect to a sum of molar proportions of $Li_2O$, $Al_2O_3$ and $SiO_2$.

6. The glass ceramic according to the above 1 or 2, in which

a composition of a base glass includes, in mol% in terms of oxides,

65% to 75% of $SiO_2$,
23% to 25% of $Li_2O$,
4% to 8% of $Al_2O_3$,
0.7% to 2.5% of $P_2O_5$,
0.6% to 1.1% of $ZrO_2$,
0% to 1% of $B_2O_3$,
0% to 1.5% of $Na_2O$,
0% to 1% of $K_2O$,
0% to 1% of ZnO, and

0% to 1% of $SnO_2$, and

a sum of molar proportions of $P_2O_5$, $ZrO_2$, $B_2O_3$, $Na_2O$, $K_2O$, ZnO, and $SnO_2$ is 4% or less with respect to a sum of molar proportions of $Li_2O$, $Al_2O_3$ and $SiO_2$.

7. The glass ceramic according to the above 6, in which the composition of the base glass is substantially free of $B_2O_3$, in mol% in terms of oxides.

8. A chemically strengthened glass including a compressive stress layer at a surface thereof, in which

a surface compressive stress value CS is 150 MPa or more,
the chemically strengthened glass includes at least one of a lithium disilicate type crystal and a solid solution crystal thereof, at least one of a virgilite type crystal and a solid solution crystal thereof, and a residual glass phase,
a fracture toughness value $K_{IC}$ is 1.0 MPa·m$^{0.5}$ or more,
a haze value in terms of a thickness of 0.7 mm is 0.8% or less, and
the chemically strengthened glass is a glass ceramic.

9. A chemically strengthened glass including a compressive stress layer at a surface thereof, in which

a surface compressive stress value CS is 100 MPa or more,
the chemically strengthened glass includes at least one of a lithium disilicate type crystal and a solid solution crystal thereof, at least one of a β-spodumene type crystal and a solid solution crystal thereof, and a residual glass phase,
a fracture toughness value $K_{IC}$ is 1.2 MPa·m$^{0.5}$ or more,
a haze value in terms of a thickness of 0.7 mm is 2.0% or less, and
the chemically strengthened glass is a glass ceramic.

10. The chemically strengthened glass according to the above 8 or 9, in which

a base composition of the chemically strengthened glass includes, in mol% in terms of oxides,

65% to 75% of $SiO_2$,
23% to 25% of $Li_2O$,
4% to 8% of $Al_2O_3$,
0.5% to 2.5% of $P_2O_5$,
0.6% to 2% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 5% or less with respect to a sum of molar proportions of $Li_2O$, $Al_2O_3$ and $SiO_2$.

11. A method for producing the glass ceramic according to the above 1 or 2, the method including:

performing a heat treatment on an amorphous glass including, in mol% in terms of oxides, 65% to 75% of $SiO_2$, 23% to 25% of $Li_2O$, 4% to 8% of $Al_2O_3$, 0.5% to 2.5% of $P_2O_5$, 0.6% to 2% of $ZrO_2$, 0% to 1% of $B_2O_3$, 0% to 1.5% of $Na_2O$, 0% to 1% of $K_2O$, 0% to 1% of ZnO, and 0% to 1% of $SnO_2$, and having a sum of molar proportions of $P_2O_5$, $ZrO_2$, $B_2O_3$, $Na_2O$, $K_2O$, ZnO, and $SnO_2$ of 5% or less with respect to a sum of molar proportions of $Li_2O$, $Al_2O_3$ and $SiO_2$, in which
the heat treatment includes a plurality of stages of heat treatment,
the plurality of stages of heat treatment include a first stage of heat treatment at 500°C to 540°C for 10 minutes to 24 hours, and a final stage of heat treatment at 700°C or higher and lower than 850°C for 2 hours to 8 hours or at 830°C to 860°C for 10 minutes to 60 minutes, and
a temperature increase rate and a temperature decrease rate in each stage of heat treatment are 5°C/min to 120°C/min.

12. A method for producing the glass ceramic according to the above 1 or 2, the method including:

performing a heat treatment on an amorphous glass including, in mol% in terms of oxides, 65% to 75% of $SiO_2$, 23% to 25% of $Li_2O$, 4% to 8% of $Al_2O_3$, 0.5% to 2.5% of $P_2O_5$, 0.6% to 2% of $ZrO_2$, 0% to 1% of $B_2O_3$, 0% to 1.5% of $Na_2O$, 0% to 1% of $K_2O$, 0% to 1% of ZnO, and 0% to 1% of $SnO_2$, and having a sum of molar proportions of $P_2O_5$, $ZrO_2$, $B_2O_3$, $Na_2O$, $K_2O$, ZnO, and $SnO_2$ of 5% or less with respect to a sum of molar proportions of $Li_2O$, $Al_2O_3$ and $SiO_2$, in which
the heat treatment includes a plurality of stages of heat treatment,
the plurality of stages of heat treatment include a first stage of heat treatment at 500°C to 540°C for 10 minutes to 24 hours, and a final stage of heat treatment at 730°C or higher and lower than 800°C for 2 hours to 8 hours or at 830°C to 860°C for 10 minutes to 60 minutes, and
a temperature increase rate and a temperature decrease rate in each stage of heat treatment are 5°C/min to 120°C/min.

13. A glass ceramic including a crystal, in which

when a $K_I$-v curve showing a relationship between a stress intensity factor $K_I$ (unit: MPa·m$^{0.5}$) and a crack growth rate v (unit: m/s) of the glass ceramic is measured,
the $K_I$-v curve has Region I, Region II, and Region III from a region where the crack growth rate v is small,
the $K_I$-v curve has an inflection point in the Region III, and
when the crack growth rate v is fitted to the stress intensity factor $K_I$ using an exponential function, a ratio (x_Region III-2/x_region III-1) of an exponent value (x_Region III-2) of the exponential function on a side of Region III-2 to an exponent value (x_Region III-1) of the exponential function on a side of Region III-1 is less than 0.25,
provided that the Region III-1 is a region where the crack growth rate v is smaller and the Region III-2 is a region where the crack growth rate v is larger in the Region III with the inflection point as a boundary.

14. The glass ceramic according to the above 13, in which

a composition of a base glass includes, in mol% in terms of oxides,

65% to 75% of $SiO_2$,
23% to 25% of $Li_2O$,
4% to 8% of $Al_2O_3$,
0.5% to 2.5% of $P_2O_5$,
0.6% to 2% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 5% or less with respect to a sum of molar proportions of $Li_2O$, $Al_2O_3$ and $SiO_2$.

15. The glass ceramic according to the above 13, in which

a composition of a base glass includes, in mol% in terms of oxides,

65% to 75% of $SiO_2$,
23% to 25% of $Li_2O$,
4% to 8% of $Al_2O_3$,
0.7% to 2.5% of $P_2O_5$,
0.6% to 1.1% of $ZrO_2$,
0% to 1% of $B_2O_3$,
0% to 1.5% of $Na_2O$,
0% to 1% of $K_2O$,
0% to 1% of ZnO, and

0% to 1% of $SnO_2$, and

a sum of molar proportions of $P_2O_5$, $ZrO_2$, $B_2O_3$, $Na_2O$, $K_2O$, ZnO, and $SnO_2$ is 4% or less with respect to a sum of molar proportions of $Li_2O$, $Al_2O_3$ and $SiO_2$.

16. The glass ceramic according to the above 15, in which the composition of the base glass is substantially free of $B_2O_3$, in mol% in terms of oxides.

17. A chemically strengthened glass including a compressive stress layer at a surface thereof, in which the chemically strengthened glass is the glass ceramic according to any one of the above 13 to 16.

18. A glass ceramic, in which

in a case where a $K_I$-v curve showing a relationship between a stress intensity factor $K_I$ (unit: $MPa \cdot m^{0.5}$) and a crack growth rate v (unit: m/s) of the glass ceramic is measured,
when the crack growth rate v between $1 \times 10^{-4}$ m/s and $1 \times 10^{-1}$ m/s is fitted to $K_I$ using an exponential function having e as a base, a coefficient value for the stress intensity factor in an exponent is less than 130 ($MPa^{-1} \cdot m^{-0.5}$) and
a haze value in terms of a thickness of 0.7 mm is less than 2.0%.

19. A chemically strengthened glass including a compressive stress layer at a surface thereof, in which the chemically strengthened glass is the glass ceramic according to the above 18.

20. The glass ceramic according to the above 18 or 19, in which

a composition of a base glass includes, in mol% in terms of oxides,

65% to 75% of $SiO_2$,
23% to 25% of $Li_2O$,
4% to 8% of $Al_2O_3$,
0.5% to 2.5% of $P_2O_5$,
0.6% to 2% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 5% or less with respect to a sum of molar proportions of $Li_2O$, $Al_2O_3$ and $SiO_2$.

21. The glass ceramic according to the above 18 or 19, in which

a composition of a base glass includes, in mol% in terms of oxides,

65% to 75% of $SiO_2$,
23% to 25% of $Li_2O$,
4% to 8% of $Al_2O_3$,
0.7% to 2.5% of $P_2O_5$,
0.6% to 1.1% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 4% or less with respect to a sum of molar proportions of $Li_2O$, $Al_2O_3$ and $SiO_2$.

22. The glass ceramic according to the above 21, in which the composition of the base glass is substantially free of $B_2O_3$, in mol% in terms of oxides.

ADVANTAGEOUS EFFECTS OF INVENTION

The glass ceramic according to the present invention contains a predetermined crystal and has a fracture toughness value $K_{IC}$ of a predetermined value or more and a haze value of a predetermined value or less, and is thus excellent in strength by chemical strengthening and excellent in both drop strength and transparency.

The chemically strengthened glass according to the present invention is a glass ceramic, contains a predetermined crystal, and has a fracture toughness value $K_{IC}$ of a predetermined value or more and a haze value of a predetermined value or less, and is thus excellent in both drop strength and transparency.

BRIEF DESCRIPTION OF DRAWINGS

[FIG. 1] FIG. 1 is a diagram illustrating a sample shape for use in DCDC method.
[FIG. 2] FIG. 2 is a diagram schematically showing a $K_I$-v curve.
[FIG. 3] FIG. 3 is a diagram showing a Region III in a $K_I$-v curve of a glass ceramic in Example 3.
[FIG. 4] FIG. 4 is a diagram showing results of X-ray diffraction measurement of glass ceramics in Examples 3, 8 and 9.
[FIG. 5A to 5D] FIG. 5A to FIG. 5D are diagrams showing stress profiles after the glass ceramics in Examples 3, 8 and 9 are subjected to chemical strengthening.

DESCRIPTION OF EMBODIMENTS

In the present description, "to" indicating a numerical range is used in the sense of including the numerical values set forth before and after the "to" as a lower limit value and an upper limit value. Unless otherwise specified, "to" hereinafter in the present description is used in the same meaning.

In the present description, a "chemically strengthened glass" refers to a glass after a chemical strengthening treatment, and a "glass for chemical strengthening" refers to a glass before a chemical strengthening treatment.

In the present description, a "base composition of a chemically strengthened glass" is a glass composition of the glass for chemical strengthening. In the chemically strengthened glass, a glass composition at a depth of 1/2 of a sheet thickness t is the base composition of the chemically strengthened glass except for a case where an extreme ion exchange treatment is performed.

In the present description, the glass composition is expressed in mol% in terms of oxides unless otherwise specified, and mol% is simply expressed as "%".

In the present description, "being substantially free of" means that a component has a content equal to or less than an impurity level contained in raw materials and the like, that is, the component is not intentionally contained. Specifically, the content is, for example, less than 0.1 mol%.

In the present description, a "stress profile" represents a compressive stress value with the depth from a glass surface as a variable. In addition, a "compressive stress layer depth (DOL)" is a depth at which the compressive stress value (CS) is zero. An "internal tensile stress value (CT)" refers to a tensile stress value at a depth of 1/2 of the sheet thickness t of the glass.

The stress profile in the present description can be measured using a scattered light photoelastic stress meter (for example, SLP-1000 manufactured by Orihara Industrial Co., Ltd.). With the scattered light photoelastic stress meter, the measurement accuracy near a sample surface may decrease due to an influence of surface scattering. However, for example, in the case where a compressive stress is generated only by ion exchange between lithium ions in the glass and external sodium ions, the compressive stress value represented by a function of the depth follows a complementary error function, and therefore, a surface stress value can be obtained by measuring an internal stress value. In the case of not following the complementary error function, the stress value on the surface portion is measured by using another method, for example, a measurement method using a surface stress meter.

In the present description, an "amorphous glass" and a "glass ceramic" may be collectively referred to as a "glass". In the present description, the "amorphous glass" refers to a glass in which a diffraction peak indicating a crystal is not observed by using powder X-ray diffraction.

In the present description, the "glass ceramic" refers to a glass in which a crystal is precipitated obtained by subjecting the "amorphous glass" to a heat treatment to precipitate the crystal. In the present description, the "glass ceramic" refers to a glass in which a diffraction peak indicating a crystal is observed by using X-ray diffraction (XRD). The X-ray diffraction measurement can be performed by using, for example, a measurement method using $CuK\alpha$ rays in a range where $2\theta$ is 10° to 80°. In the case of obtaining the glass ceramic by subjecting an amorphous glass to a heat treatment, the amorphous glass before the heat treatment may be referred to as a "base glass of the glass ceramic".

In the present description, the crystal precipitated in the glass ceramic can be identified by powder X-ray diffraction (PXRD) measurement. In the present description, a content of each crystal in the glass ceramic is a crystal molar fraction of each crystal in consideration of a proportion at which the crystal molar fraction is maximized, the entire glass ceramic being taken as 100 mol%, and the crystal precipitated at the composition and the temperature being precipitated in a stoichiometric composition.

(Glass Ceramic)

A glass ceramic according to a first embodiment of the present invention contains: at least one of a lithium disilicate type crystal and a solid solution crystal thereof; at least one of a virgilite type crystal and a solid solution crystal thereof; and a residual glass phase, in which a fracture toughness value $K_{IC}$ is 1.0 MPa·m$^{0.5}$ or more, and a haze value in terms of a thickness of 0.7 mm is 0.8% or less.

A glass ceramic according to a second embodiment of the present invention contains: at least one of a lithium disilicate type crystal and a solid solution crystal thereof; at least one of a β-spodumene type crystal and a solid solution crystal thereof; and a residual glass phase, in which a fracture toughness value $K_{IC}$ is 1.2 MPa·m$^{0.5}$ or more, and a haze value in terms of a thickness of 0.7 mm is 2.0% or less.

In the present description, the glass ceramic according to the first embodiment and the glass ceramic according to the second embodiment may be collectively referred to as a glass ceramic according to the present embodiment.

(Crystal)

(First Embodiment)

The glass ceramic according to the first embodiment contains: at least one of a lithium disilicate type crystal and a solid solution crystal thereof, at least one of a virgilite type crystal and a solid solution crystal thereof; and a residual glass phase.

The glass ceramic according to the first embodiment contains at least one of a lithium disilicate type crystal and a solid solution crystal thereof. The lithium disilicate type crystal is a crystal having a composition represented by $Li_2Si_2O_5$. The lithium disilicate type crystal and a solid solution crystal thereof include perfect lithium disilicate ($Li_2Si_2O_5$), lithium disilicate containing defects, and lithium disilicate in which a different element is solid-dissolved. Hereinafter, "at least one of a lithium disilicate type crystal and a solid solution crystal thereof" may be referred to as a "lithium disilicate-based crystal".

When the glass ceramic according to the first embodiment contains the lithium disilicate-based crystal, the fracture toughness value $K_{IC}$ of the glass ceramic is increased, and accordingly, the drop strength can be improved. In the glass ceramic according to the first embodiment, a content of the lithium disilicate-based crystal is preferably 36 mol% or more, more preferably 42 mol% or more, and particularly preferably 48 mol% or more, from the viewpoint of increasing the fracture toughness value $K_{IC}$. On the other hand, the content is preferably 63 mol% or less, and particularly preferably 56 mol% or less, from the viewpoint of ensuring an appropriate amount of the residual glass phase or virgilite to be precipitated.

The glass ceramic containing a lithium disilicate-based crystal can be checked based on that peaks attributed to (130), (040), and (111) planes are present in 2θ = 23° to 25° in an XRD pattern.

The glass ceramic according to the first embodiment contains at least one of a virgilite type crystal and a solid solution crystal thereof. The virgilite type crystal is a hexagonal crystal having a composition represented by $LiAlSi_2O_6$. The virgilite type crystal and a solid solution crystal thereof include perfect virgilite ($LiAlSi_2O_6$), virgilite containing defects, and virgilite in which a different element is solid-dissolved, and specifically, include one in which at least one or more selected from the group consisting of Na, K and a divalent cation is substituted on the Li site in hexagonal $LiAlSi_2O_6$, or one in which a trivalent cation is substituted on at least one of the Al site and the Si site in hexagonal $LiAlSi_2O_6$. Hereinafter, "at least one of a virgilite type crystal and a solid solution crystal thereof" may be referred to as a "virgilite-based crystal".

The inventors of the present invention have found that when the glass ceramic contains the lithium disilicate-based crystal and the virgilite-based crystal, the fracture toughness value $K_{IC}$ of the glass ceramic can be made relatively larger while the haze value can be made relatively smaller As the reasons, it is thought that the lithium disilicate-based crystal easily increases the fracture toughness value $K_{IC}$ of the glass ceramic, and refractive index matching with a lithium disilicate phase by generation of the virgilite-based crystal suppresses the haze. That is, when the glass ceramic according to the first embodiment contains the lithium disilicate-based crystal and the virgilite-based crystal, both the drop strength and the transparency are excellent.

In the glass ceramic according to the first embodiment, a content of the virgilite-based crystal is preferably 18 mol% or more, more preferably 21 mol% or more, and particularly preferably 24 mol% or more, from the viewpoint of improving the toughness through crystal precipitation. On the other hand, the content is preferably 36 mol% or less, more preferably 32 mol% or less, and particularly preferably 28 mol% or less, from the viewpoint of complementary generation with lithium disilicate.

The glass ceramic containing a virgilite-based crystal can be checked based on that a peak attributed to a (101) plane is present between 20 = 25.7° to 25.9° in the XRD pattern.

The glass ceramic according to the first embodiment preferably contains 54 mol% or more of the lithium disilicate-based crystal and the virgilite-based crystal in total, from the viewpoint of high toughness and low haze. The total content of the lithium disilicate-based crystal and the virgilite-based crystal is more preferably 63 mol% or more, particularly preferably 72 mol% or more, and still more preferably 81 mol% or more. The total content is preferably 95 mol% or less, more preferably 93 mol% or less, still more preferably 91 mol% or less, and particularly preferably 90 mol% or less, from the viewpoint of formability including a residual glass and chemical strengthening.

The glass ceramic according to the first embodiment may contain any crystals (other crystals) other than the lithium disilicate-based crystal and the virgilite-based crystal, as long as the effects of the present invention are not impaired. However, a case where the other crystals include a β-spodumene-based crystal will be described later as the second embodiment. The other crystals may include at least one crystal selected from petalite, eucryptite, and lithium phosphate.

Examples of the other crystals include a mixed crystal compound based on $ZrO_2$, ZnO, and the like.

In the case where the glass ceramic according to the first embodiment contains other crystals, specifically, for example, a preferred content thereof is preferably 5 mol% or less, more preferably 4 mol% or less, still more preferably 3 mol% or less, and particularly preferably 2 mol% or less, for each type of crystal, from the viewpoint of reducing the haze value. The content of the other crystals is preferably 0 mol% or more, for each type of crystal, from the viewpoint of nucleation, and is preferably a content that the other crystals function only as a nucleation species, and it is preferable to increase the amount of the main crystal to be precipitated as much as possible.

The total content of the other crystals is preferably 5 mol% or less, more preferably 4 mol% or less, still more preferably 3 mol% or less, and particularly preferably 2 mol% or less, from the viewpoint of reducing the haze. The total content of the other crystals is preferably 0 mol% or more from the viewpoint of nucleation, and is preferably a content that the other crystals function only as a nucleation species, and it is preferable to increase the amount of the main crystal to be precipitated as much as possible.

The glass ceramic according to the first embodiment has a degree of crystallinity of preferably 56 mol% or more, more preferably 65 mol% or more, still more preferably 74 mol% or more, and particularly preferably 83 mol% or more, from the viewpoint of high toughness. The degree of crystallinity is preferably 97 mol% or less, more preferably 95 mol% or less, still more preferably 93 mol% or less, and particularly preferably 92 mol% or less, from the viewpoint of the formability by the residual glass phase. The degree of crystallinity is a total of precipitation proportions of respective crystals in the glass ceramic, and is a total of the content proportions of the lithium disilicate-based crystal, the virgilite-based crystal, and the other crystals.

The glass ceramic according to the first embodiment contains a residual glass phase. The residual glass phase is an amorphous phase in the glass ceramic. In the glass ceramic according to the first embodiment, a proportion of the residual glass phase is preferably 44 mol% or less, more preferably 35 mol% or less, still more preferably 26 mol% or less, and particularly preferably 17 mol% or less. The proportion of the residual glass phase is preferably 3 mol% or more, more preferably 5 mol% or more, still more preferably 7 mol% or more, and particularly preferably 8 mol% or more, from the viewpoint of improving the formability. Here, in the present description, the proportion of the residual glass phase refers to a value obtained by subtracting a crystal molar fraction from 100 mol% in consideration of a proportion at which the crystal molar fraction is maximized, the entire glass ceramic being taken as 100 mol%, and the crystal precipitated at the composition and the temperature being precipitated in a stoichiometric composition.

In the glass ceramic according to the first embodiment, an average particle diameter of the precipitated crystal is preferably 80 nm or less, more preferably 70 nm or less, still more preferably 60 nm or less, still more preferably 50 nm or less, particularly preferably 40 nm or less, and most preferably 30 nm or less, from the viewpoint of improving the transparency. The average particle diameter of the precipitated crystal is, for example, preferably 5 nm or more, more preferably 6 nm or more, still more preferably 7 nm or more, particularly preferably 8 nm or more, even more preferably 9 nm or more, and most preferably 10 nm or more, in order to increase the strength. The average particle diameter of the precipitated crystal is determined based on a transmission electron microscope (TEM) image. The average particle diameter of the precipitated crystal can be estimated based on a scanning electron microscope (SEM) image.

(Second Embodiment)

The glass ceramic according to the second embodiment contains: at least one of a lithium disilicate type crystal and a solid solution crystal thereof; at least one of a β-spodumene type crystal and a solid solution crystal thereof; and a residual glass phase.

The glass ceramic according to the second embodiment contains at least one of a lithium disilicate type crystal and a solid solution crystal thereof. The lithium disilicate type crystal is a crystal having a composition represented by

$Li_2Si_2O_5$. The lithium disilicate type crystal and a solid solution crystal thereof include perfect lithium disilicate ($Li_2Si_2O_5$), lithium disilicate containing defects, and lithium disilicate in which a different element is solid-dissolved. Hereinafter, "at least one of a lithium disilicate type crystal and a solid solution crystal thereof" may be referred to as a "lithium disilicate-based crystal".

When the glass ceramic according to the second embodiment contains the lithium disilicate-based crystal, the fracture toughness value $K_{IC}$ of the glass ceramic is increased, and accordingly, the drop strength can be improved. In the glass ceramic according to the second embodiment, a content of the lithium disilicate-based crystal is preferably 36 mol% or more, more preferably 42 mol% or more, and particularly preferably 48 mol% or more, from the viewpoint of increasing the fracture toughness value $K_{IC}$. On the other hand, the content is preferably 63 mol% or less, and particularly preferably 56 mol% or less, from the viewpoint of chemical strengthening.

The glass ceramic containing the lithium disilicate-based crystal can be checked by a method same as the method in the first embodiment.

The glass ceramic according to the second embodiment contains at least one of a β-spodumene type crystal and a solid solution crystal thereof. The β-spodumene type crystal is a tetragonal crystal having a composition represented by $LiAlSi_2O_6$. The β-spodumene type crystal and a solid solution crystal thereof include perfect β-spodumene ($LiAlSi_2O_6$), β-spodumene containing defects, and β-spodumene in which a different element is solid-dissolved, and specifically, include one in which at least one or more selected from the group consisting of Na, K and a divalent cation is substituted on the Li site in tetragonal $LiAlSi_2O_6$, or one in which a trivalent cation is substituted on at least one of the Al site and the Si site in tetragonal $LiAlSi_2O_6$. Hereinafter, "at least one of a β-spodumene type crystal and a solid solution crystal thereof" may be referred to as "β-spodumene-based crystal".

The inventors of the present invention have found that when the glass ceramic contains the lithium disilicate-based crystal and the β-spodumene-based crystal, the fracture toughness value $K_{IC}$ of the glass ceramic can be made relatively larger while the haze value can be made relatively smaller. As the reasons, it is thought that the lithium disilicate-based crystal easily increases the fracture toughness value $K_{IC}$ of the glass ceramic, and refractive index matching with a lithium disilicate phase by generation of the β-spodumene-based crystal suppresses the haze. That is, when the glass ceramic according to the second embodiment contains the lithium disilicate-based crystal and the β-spodumene-based crystal, both the drop strength and the transparency are excellent. In addition, the β-spodumene-based crystal tends to make a glass ceramic more excellent in chemical strengthening properties. Therefore, the glass ceramic according to the second embodiment is excellent in both drop strength and transparency, and is more excellent in chemical strengthening properties. Note that, here, being excellent in chemical strengthening properties refers to that a compressive stress difference between the surface and the interior is generated due to a chemical strengthening treatment, making it easier to increase the strength.

The β-spodumene-based crystal and the above virgilite-based crystal have the same composition but are crystal species different from each other. The virgilite-based crystal is of a crystal species that can precipitate as a precursor of the β-spodumene-based crystal. Therefore, the glass ceramic according to the second embodiment may further contain a virgilite-based crystal in addition to the lithium disilicate-based crystal and the β-spodumene-based crystal. In this case, the glass ceramic according to the second embodiment can also be the glass ceramic according to the first embodiment.

In the glass ceramic according to the second embodiment, a content of the β-spodumene-based crystal is preferably 18 mol% or more, more preferably 21 mol% or more, and particularly preferably 24 mol% or more, from the viewpoint of improving the toughness through crystal precipitation and from the viewpoint of improving the chemical strengthening properties. On the other hand, the content is preferably 36 mol% or less, more preferably 32 mol% or less, and particularly preferably 28 mol% or less, from the viewpoint of complementary generation with lithium disilicate.

The glass ceramic containing a β-spodumene-based crystal can be checked based on that a peak attributed to a (102) plane is present between $2\theta = 22.5°$ to $23.3°$ in the XRD pattern.

In the glass ceramic according to the second embodiment, a content of the virgilite-based crystal has a relationship with a generation amount of the β-spodumene-based crystal. Further, the content of the virgilite-based crystal is preferably 13 mol% or more, more preferably 15 mol% or more, and particularly preferably 18 mol% or more, from the viewpoint of improving the chemical strengthening properties by containing the β-spodumene-based crystal. On the other hand, the content is preferably 36 mol% or less, more preferably 30 mol% or less, and particularly preferably 27 mol% or less, from the viewpoint of reducing the haze.

The glass ceramic containing the virgilite-based crystal can be checked by a method same as the method in the first embodiment.

The glass ceramic according to the second embodiment preferably contains 11 mol% or more of the β-spodumene-based crystal and the virgilite-based crystal in total, from the viewpoint of improving the toughness through crystal precipitation and from the viewpoint of improving the chemical strengthening properties. The total content of the β-spodumene-based crystal and the virgilite-based crystal is more preferably 13 mol% or more, particularly preferably 15 mol% or more, and still more preferably 17 mol% or more. The total content is preferably 36 mol% or less, more preferably 34 mol% or less, still more preferably 32 mol% or less, and particularly preferably 30 mol% or less, from the viewpoint of reducing the haze.

The glass ceramic according to the second embodiment preferably contains 54 mol% or more of the lithium disilicate-based crystal, the β-spodumene-based crystal, and the virgilite-based crystal in total, from the viewpoint of obtaining a material that is easy to be chemically strengthened and that has high toughness. The total content of the lithium disilicate-based crystal and the β-spodumene-based crystal is more preferably 63 mol% or more, particularly preferably 72 mol% or more, and still more preferably 81 mol% or more. The total content is preferably 95 mol% or less, more preferably 93 mol% or less, still more preferably 91 mol% or less, and particularly preferably 90 mol% or less, from the viewpoint of the formability including a residual glass and the chemical strengthening properties.

The glass ceramic according to the second embodiment may contain any crystals (other crystals) other than the lithium disilicate-based crystal, the β-spodumene-based crystal, and the virgilite-based crystal, as long as the effects of the present invention are not impaired. The other crystals may include at least one crystal selected from petalite, eucryptite, and lithium phosphate.

Examples of the other crystals include a mixed crystal compound based on $ZrO_2$, ZnO, and the like.

In the case where the glass ceramic according to the second embodiment contains other crystals, specifically, for example, a preferred content thereof is preferably 5 mol% or less, more preferably 4 mol% or less, still more preferably 3 mol% or less, and particularly preferably 2 mol% or less, for each type of crystal, from the viewpoint of reducing the haze. The content of the other crystals is preferably 0 mol% or more, for each type of crystal, from the viewpoint of nucleation, and is preferably a content that the other crystals function only as a nucleation species and that the amount of the main crystal to be precipitated is increased as much as possible.

The total content of the other crystals is preferably 5 mol% or less, more preferably 4 mol% or less, still more preferably 3 mol% or less, and particularly preferably 2 mol% or less, from the viewpoint of reducing the haze. The total content of the other crystals is preferably 0 mol% or more from the viewpoint of nucleation, and is preferably a content that the other crystals function only as a nucleation species, and it is preferable to increase the amount of the main crystal to be precipitated as much as possible.

The glass ceramic according to the second embodiment has a degree of crystallinity of preferably 56 mol% or more, more preferably 65 mol% or more, still more preferably 74 mol% or more, and particularly preferably 83 mol% or more, from the viewpoint of achieving both fracture toughness and ease of chemical strengthening. The degree of crystallinity is preferably 97 mol% or less, more preferably 95 mol% or less, still more preferably 93 mol% or less, and particularly preferably 92 mol% or less, from the viewpoint of the formability by the residual glass phase. The degree of crystallinity is a total of precipitation proportions of respective crystals in the glass ceramic, and is a total of the content proportions of the lithium disilicate-based crystal, the β-spodumene-based crystal, the virgilite-based crystal, and the other crystals.

The glass ceramic according to the second embodiment contains a residual glass phase. In the glass ceramic according to the second embodiment, a proportion of the residual glass phase is preferably 44 mol% or less, more preferably 35 mol% or less, still more preferably 26 mol% or less, and particularly preferably 17 mol% or less. The proportion of the residual glass phase is preferably 3 mol% or more, more preferably 5 mol% or more, still more preferably 7 mol% or more, and particularly preferably 8 mol% or more, from the viewpoint of the formability. The definition of the residual glass phase is the same as in the first embodiment, and a proportion thereof is determined by a method same as the method in the first embodiment.

In the glass ceramic according to the second embodiment, an average particle diameter of the precipitated crystal is preferably 80 nm or less, more preferably 70 nm or less, still more preferably 60 nm or less, still more preferably 50 nm or less, particularly preferably 40 nm or less, and most preferably 30 nm or less, from the viewpoint of improving the transparency. The average particle diameter of the precipitated crystal is, for example, preferably 5 nm or more, more preferably 6 nm or more, still more preferably 7 nm or more, particularly preferably 8 nm or more, even more preferably 9 nm or more, and most preferably 10 nm or more, in order to increase the strength. The average particle diameter of the precipitated crystal is determined based on a transmission electron microscope (TEM) image. The average particle diameter of the precipitated crystal can be estimated based on a scanning electron microscope (SEM) image.

(Fracture Toughness Value $K_{IC}$)

The glass ceramic according to the first embodiment has a fracture toughness value $K_{IC}$ of 1.0 MPa·m$^{0.5}$ or more. When the fracture toughness value $K_{IC}$ is relatively large, crack growth is prevented, so that the glass ceramic according to the present embodiment is excellent in drop strength. In the glass ceramic according to the first embodiment, the fracture toughness value $K_{IC}$ is more preferably 1.1 MPa·m$^{0.5}$ or more, and still more preferably 1.2 MPa·m$^{0.5}$ or more.

The glass ceramic according to the second embodiment has a fracture toughness value $K_{IC}$ of 1.2 MPa·m$^{0.5}$ or more. When the fracture toughness value $K_{IC}$ is relatively large, crack growth is prevented, so that the glass ceramic according to the present embodiment is excellent in drop strength. In the glass ceramic according to the second embodiment, the fracture toughness value $K_{IC}$ is more preferably 1.1 MPa·m$^{0.5}$ or more, and still more preferably 1.2 MPa·m$^{0.5}$ or more.

The fracture toughness value K$_{IC}$ is not particularly limited in upper limit, and may be, for example, 1.4 MPa·m$^{0.5}$ or less.

Examples of a method of setting the fracture toughness value K$_{IC}$ to the above range include using the crystal species contained in a glass ceramic as described above, and preferred examples thereof include relatively increasing the degree of crystallinity, setting the glass composition to a preferred range to be described later, and adjusting a crystal proportion. In the present description, the fracture toughness value K$_{IC}$ refers to a value measured by using a double cleavage drilled compression (DCDC) method (Acta metall. mater. Vol. 43, pp. 3453-3458, 1995) or an SEPB method specified in JIS R1607. Since the DCDC method can determine the fracture toughness value K$_{IC}$ more accurately than the SEPB method, the fracture toughness value K$_{IC}$ is more preferably a value determined by using the DCDC method.

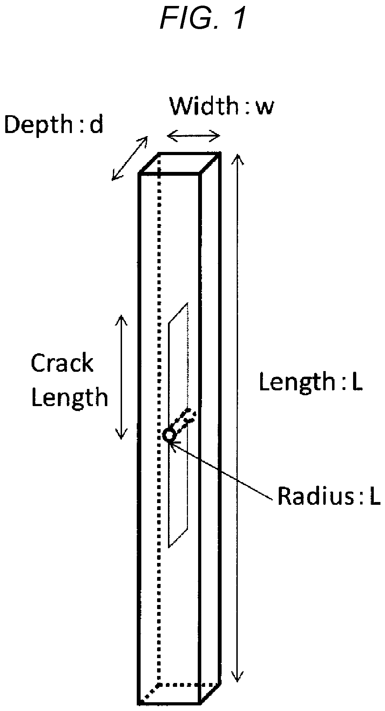

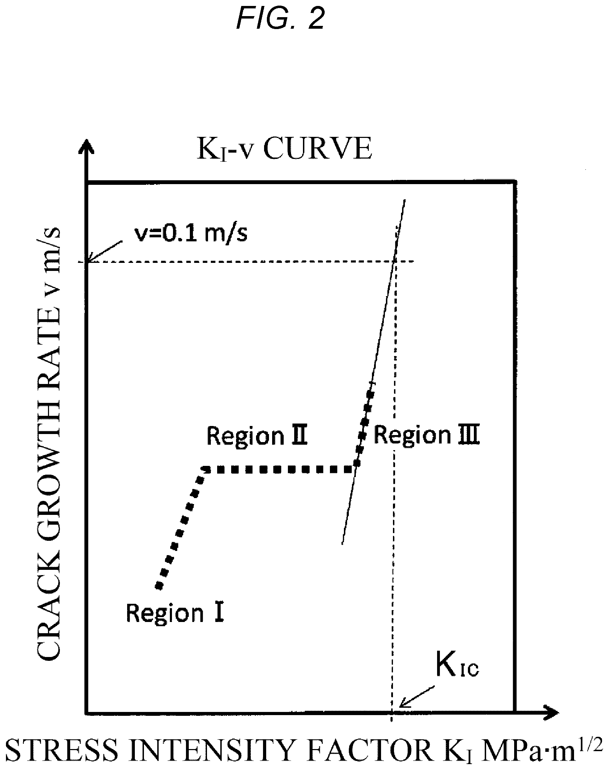

In the case of measuring the fracture toughness value by using the DCDC method, more specifically, with reference to a method described in M. Y. He, M.R. Turner and A.G. Evans, Acta Metall. Mater. 43 (1995) 3453., the DCDC method is performed by using a sample having a shape shown in FIG. 1 and Autograph AGS-X5KN manufactured by Shimadzu Corporation and measuring a state of crack growth using a high-speed camera. Further more specifically, in order to capture a crack that grows over a long distance of 9 mm or more while changing the rate, among a Region III, in a region where the crack grows at a high rate of $1 \times 10^{-4}$ m/s or more, the high-speed camera is caused to follow the crack at a rate of 500 μm/s or more and capture the crack, and in a region where the crack grows at a slow rate of less than $1 \times 10^{-4}$ m/s, the crack is captured at a camera speed. Note that, the camera exposes at an interval short enough that the crack growth rate can be evaluated. By capturing the crack growth behavior using the above method, a K$_I$-v curve showing a relationship between a stress intensity factor K$_I$ (unit: MPa·m$^{0.5}$) and a crack growth rate v (unit: m/s) as shown in FIG. 2 is measured, the obtained Region III data is regressed and extrapolated using a linear equation, and the stress intensity factor K$_I$ at 0.1 m/s is defined as the fracture toughness value K$_{IC}$. However, as to be described later, in the case where the K$_I$-v curve has an inflection point in the Region III, Region III-2 data is regressed and extrapolated using a linear equation, and the stress intensity factor K$_I$ at 0.1 m/s is defined as the fracture toughness value K$_{IC}$.

Note that, as shown in FIG. 2, the K$_I$-v curve has a Region I, a Region II, and the Region III from a region where the crack growth rate v is small. In the K$_I$-v curve, the Region I refers to a slow growth region of cracks caused by a bond cleavage reaction, the Region II refers to a crack growth region where water and other molecules react at a crack front, and the Region III refers to a region where the crack growth rate accelerates and transitions to unstable fracture (Introduction to Fracture in Glass, Yoshida, New Glass magazine (September 2008), and Fatigue Crack Growth Properties of Hot Work Die Steels, Yamada Toyota Lab R&D review, Vol. 27, (December 1992)).

(K$_I$-v Curve)

In addition, the inventors of the present invention have found that the glass ceramic according to the present embodiment has a peculiar inflection in the Region III in the K$_I$-v curve.

That is, in the glass ceramic according to the present embodiment, when the K$_I$-v curve showing the relationship between the stress intensity factor K$_I$ (unit:MPa·m$^{0.5}$) and the crack growth rate v (unit: m/s) is measured, the K$_I$-v curve preferably has an inflection point in the Region III.

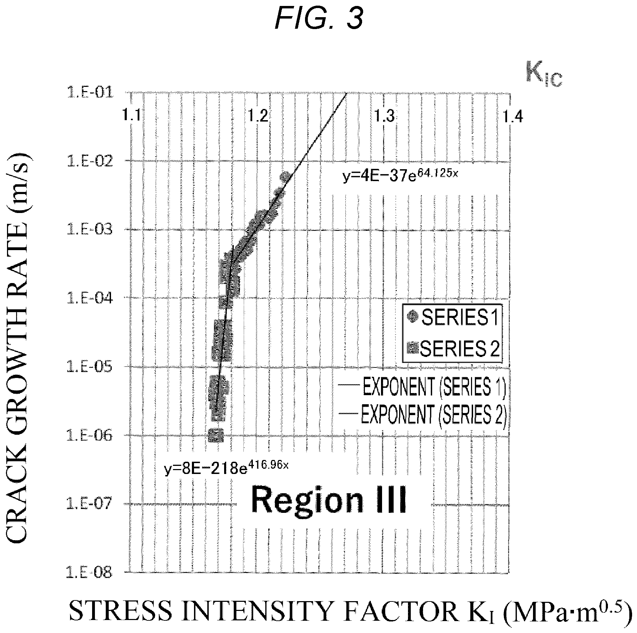

FIG. 3 is a diagram showing a Region III in a K$_I$-v curve of a glass ceramic in Example 3 in Examples to be described later. As is clear from a comparison between FIG. 2 and FIG. 3, as shown in FIG. 2, a general K$_I$-v curve measured for a material such as a glass has no inflection in the Region III, whereas the K$_I$-v curve measured for the glass ceramic according to the present embodiment has an inflection point in the Region III. Here, "having an inflection point in the Region III" refers to that a power value of K$_I$ that can best express v changes around a certain value of K$_1$. For example, the inflection point in FIG. 3 is an intersection of an equation "y = 8E - 218e$^{416.96x}$" and an equation "y = 4E - 37e$^{64.125x}$" when the y axis is plotted as a logarithm having a base of 10.

This inflection is thought to occur when, at a certain crack growth rate, the crack growth is trapped in an internal crystal or a residual glass structure, and the movement of a leading edge of the crack growth is restricted by the structure, thereby reducing a rate of increase in the crack growth rate. Then, the glass ceramic according to the present embodiment having the inflection in the Region III in the K$_I$-v curve is thought to contribute to the glass ceramic according to the present embodiment having a relatively large fracture toughness value K$_{IC}$, as described above.

When a region where the crack growth rate v is small is defined as a Region III-1 and a region where the crack growth rate v is large is defined as a Region III-2 in the Region III with the inflection as a boundary, and the crack growth rate v is fitted to the stress intensity factor K$_I$ using an exponential function, a ratio (x_Region III-2/x_region III-1) of a shoulder value (x_Region III-2) of the exponential function on a Region III-2 side to a shoulder value (x_Region III-1) of the exponential function on a Region III-1 side is preferably less than 0.25.

Assuming that the crack growth rate (m/s) can be fitted to the stress intensity factor (MPa·m$^{0.5}$) using an exponential function, the shoulder value (x_Region III-1) of the exponential function on the Region III-1 side and the shoulder value (x_Region III-2) of the exponential function on the Region III-2 side are calculated and are thought to be indices representing a degree of crack propagation rate in the Region III-1 and the Region III-2, respectively. Therefore, in consideration of the parameter x_Region III-2/x_region III-1, this can be thought as an index representing a degree of crack growth in the material structure. The smaller the ratio, the larger the energy required for the crack growth in a high-rate crack growth region, and the larger the fracture toughness. From such viewpoints, the ratio (x_Region III-2/x_region III-1) is preferably less than 0.25, and more preferably 0.20 or less. The ratio (x_Region III-2/x_region III-1) is not particularly limited in lower limit, and is preferably 0.01 or more from the viewpoint of achieving a uniform fracture process.

Examples of an aspect pf the present embodiment include a glass ceramic containing a crystal, in which when a $K_I$-v curve showing a relationship between a stress intensity factor $K_I$ (unit: $MPa \cdot m^{0.5}$) and a crack growth rate v (unit: m/s) of the glass ceramic is measured, the $K_I$-v curve has a Region I, a Region II, and a Region III from a region where the crack growth rate v is small, the $K_I$-v curve has an inflection point in the Region III, and when a region where the crack growth rate v is small is defined as a Region III-1 and a region where the crack growth rate v is large is defined as a Region III-2 in the Region III with the inflection point as a boundary, and the crack growth rate v is fitted to the stress intensity factor $K_I$ using an exponential function, a ratio (x_Region III-2/x_region III-1) of an exponent value (x_Region III-2) of the exponential function on a Region III-2 side to an exponent value (x_Region III-1) of the exponential function on a Region III-1 side is less than 0.25.

A glass ceramic having the above features of the $K_I$-v curve may be subjected to chemical strengthening to obtain a compressive stress layer on a surface, and a chemically strengthened glass which is the glass ceramic having the above features of the $K_I$-v curve may be obtained.

In the case where the double cleavage drilled compression (DCDC) method (Acta metall. mater. Vol. 43, pp. 3453-3458, 1995) is used as a method of calculating the fracture toughness value $K_{IC}$, the fracture index can be calculated under the following conditions. The state of crack growth is measured using a high-speed camera. Further more specifically, in order to capture a crack that grows over a long distance of 9 mm or more while changing the rate, among the cracks in the Region III, in a region where the crack grows at a high rate of $1 \times 10^{-4}$ m/s or more, the high-speed camera is caused to follow the crack at a rate of 500 $\mu$m/s or more and capture the crack.

For the KI-v curve of the Region III-2 region, the shoulder value of the exponential function is thought to represent a material-specific value which is a main factor of the fracture toughness value $K_{IC}$. Therefore, it is thought that the x_Region III-2 parameter itself is a dominant factor in providing larger resistance to the crack growth. From such viewpoints, in fitting the crack growth rate v in the x_Region III-2 (unit: $MPa^{-1} \cdot m^{-0.5}$), that is, between $1 \times 10^{-4}$ m/s and $1 \times 10^{-1}$ m/s, to KI using an exponential function having e as a base, a coefficient value ($MPa^{-1} \cdot m^{-0.5}$) for the stress intensity factor within the exponent is preferably less than 130, more preferably less than 120, and most preferably less than 110, less than 100, and less than 90 in order.

Examples of an aspect pf the present embodiment include a glass ceramic, in which when a KI-v curve showing a relationship between a stress intensity factor $K_I$ (unit: $MPa \cdot m^{0.5}$) and a crack growth rate v (unit: m/s) of the glass ceramic is measured, in fitting the crack growth rate v between $1 \times 10^{-4}$ m/s and $1 \times 10^{-1}$ m/s to $K_I$ using an exponential function having e as a base, a coefficient value for the stress intensity factor within an exponent is less than 130 ($MPa^{-1} \cdot m^{-0.5}$), and a haze value in terms of a thickness of 0.7 mm is less than 2.0%.

(Haze Value)

The glass ceramic according to the first embodiment has a haze value in terms of a thickness of 0.7 mm of 0.8% or less. Accordingly, the glass ceramic according to the first embodiment is excellent in transparency. The haze value of the glass ceramic according to the first embodiment is more preferably 0.7% or less, still more preferably 0.6% or less, even more preferably 0.5% or less, particularly preferably 0.3% or less, more particularly preferably 0.2% or less, and most preferably 0.15% or less.

The glass ceramic according to the second embodiment has a haze value in terms of a thickness of 0.7 mm of 2.0% or less. Accordingly, the glass ceramic according to the second embodiment is excellent in transparency. In the glass ceramic according to the second embodiment, the haze value is preferably 1.8% or less, more preferably 1.6% or less, still more preferably 1.4% or less, 1.2% or less, 1.0% or less, 0.8% or less, 0.7% or less, and 0.6% or less in order, even more preferably 0.5% or less, particularly preferably 0.3% or less, more particularly preferably 0.2% or less, and most preferably 0.15% or less.

The haze value is not particularly limited in lower limit, and may be, for example, 0.1% or more. Examples of a method of setting the haze value to the above range include using the crystal species contained in a glass ceramic as described above, and preferred examples thereof include adjusting a crystal generation condition and adjusting the residual glass component. The haze value is a value measured in accordance with JIS K7136 (2000).

Note that, in the case where a total visible light transmittance of the glass ceramic having a sheet thickness t [mm] is defined as $100 \times T$ [%] and a surface reflectance of one surface is defined as $100 \times R$ [%], a relationship $T = (1-R)^2 \times \exp(-\alpha t)$ is established using a constant $\alpha$ by referring to the Lambert-Beer law.

Here, when $\alpha$ is represented by R, T, and t, and t = 0.7 mm, R does not change depending on the sheet thickness, and thus the total visible light transmittance $T_{0.7}$ in terms of 0.7 mm can be calculated as $T_{0.7} = 100 \times T^{0.7/t}/(1-R)^{\wedge}(1.4/t-2)$ [%]. Here, X^Y represents $X^Y$.

Then, in the case where the total visible light transmittance of the glass ceramic having the sheet thickness t [mm] is defined as $100 \times T$ [%] and the haze value is defined as $100 \times H$ [%], $dH/dt \propto \exp(-\alpha t) \times (1-H)$ is established using the above constant $\alpha$ by referring to the Lambert-Beer law.

That is, since it is thought that the haze value increases in proportion to an internal linear transmittance as the sheet thickness increases, the haze value $H_{0.7}$ in the case of 0.7 mm is determined according to the following equation. Here, "X^Y" represents "$X^Y$"

$$H_{0.7} = 100 \times [1-(1-H)^{\wedge}\{((1-R)^2 \cdot T_{0.7})/((1-R)^2 \cdot T)\}]\ [\%]$$

In addition, in the case of a glass having a sheet thickness t larger than 0.7 mm, the sheet thickness may be adjusted to 0.7 mm by polishing, etching, or the like to actually measure the haze value.

(Composition of Glass Ceramic)

The composition of the glass ceramic according to the present embodiment is the same as the glass composition of the amorphous glass before crystallization in a production method to be described later, that is, the composition of the base glass of the glass ceramic. Therefore, preferred aspects of the composition of the glass ceramic according to the present embodiment and the glass composition of the base glass of the glass ceramic are the same. Here, the composition of the glass ceramic in the present description refers to the total composition of a crystal phase and an amorphous phase of the glass ceramic. In addition, the composition of the glass ceramic is determined by subjecting the glass ceramic to a heat treatment at a temperature equal to or higher than a melting point and analyzing the vitrified glass. An example of the analysis method is a fluorescent X-ray analysis method.

The composition of the glass ceramic according to the present embodiment is not particularly limited, and an example of a preferred aspect is as follows. In the composition, a lower limit of a preferred content of a non-essential component is 0%.

The glass ceramic according to the present embodiment is a lithium aluminosilicate glass containing $SiO_2$, $Al_2O_3$, and $Li_2O$. Since the lithium aluminosilicate glass contains lithium ions, which are alkali ions having the smallest ion radius, a chemically strengthened glass having a preferred stress profile is easily obtained by a chemical strengthening treatment in which ion exchange is performed using various molten salts.

$SiO_2$ is a component that constitutes the lithium disilicate-based crystal, the virgilite-based crystal, and the $\beta$-spodumene-based crystal, and is an essential component. $SiO_2$ is a component that constitutes a glass network and is also a component that improves the chemical durability. The content of $SiO_2$ is preferably 65% or more, more preferably 66% or more, still more preferably 67% or more, and particularly preferably 68% or more, from the viewpoint of precipitating the lithium disilicate-based crystal and at least one of the virgilite-based crystal and the $\beta$-spodumene-based crystal, and from the viewpoint of improving the chemical durability. The content of $SiO_2$ is preferably 75% or less, more preferably 74% or less, still more preferably 73% or less, and particularly preferably 72% or less, in order to improve the meltability during glass production.

$Li_2O$ is a component that constitutes the lithium disilicate-based crystal, the virgilite-based crystal, and the $\beta$-spodumene-based crystal, and is an essential component. $Li_2O$ is a component that forms the surface compressive stress by ion exchange, and is also a component that improves the meltability of the glass. When the glass ceramic contains $Li_2O$, a stress profile with a large surface compressive stress and a large compressive stress layer is obtained by a method of performing ion exchange of Li ions on the glass surface with Na ions, and further ion exchange of Na ions with K ions. The content of $Li_2O$ is preferably 23% or more, more preferably 23.5% or more, and particularly preferably 24% or more, from the viewpoint of precipitating the lithium disilicate-based crystal and at least one of the virgilite-based crystal and the $\beta$-spodumene-based crystal, and from the viewpoint of increasing the strength by chemical strengthening. On the other hand, the content of $Li_2O$ is preferably 25% or less, and particularly preferably 24.9% or less, in order to stabilize the glass.

$Al_2O_3$ is a component that constitutes the virgilite-based crystal and the $\beta$-spodumene-based crystal, and is an essential component. $Al_2O_3$ is an effective component from the viewpoint of improving the ion exchange performance during chemical strengthening and increasing the surface compressive stress after strengthening. $Al_2O_3$ is also a component that improves the chemical durability. The content of $Al_2O_3$ is preferably 4% or more, and more preferably 4.5% or more, in order to precipitate at least one of the virgilite-based crystal and the $\beta$-spodumene-based crystal, and in order to improve the chemical durability or the chemical strengthening properties. The content of $Al_2O_3$ is preferably 8% or less, more preferably 7% or less, still more preferably 6.5% or less, and particularly preferably 6% or less, from the viewpoint of precipitating lithium disilicate.

The total content of $Li_2O$ and $Al_2O_3$ is preferably 27% or more, more preferably 28% or more, still more preferably 29% or more, and particularly preferably 29.5% or more, from the viewpoint of appropriately adjusting the crystal to be generated. The total content of $Li_2O$ and $Al_2O_3$ is preferably 33% or less, more preferably 32% or less, still more preferably 31% or less, and particularly preferably 30.5% or less, from the viewpoint of adjusting the crystal to be generated and the residual glass phase.

A ratio ($Al_2O_3/Li_2O$) of the content of $Al_2O_3$ to the content of $Li_2O$ may influence a proportion of the precipitated crystal. That is, when the value of ($Al_2O_3/Li_2O$) is relatively large, a ratio of the precipitation proportion of at least one of the virgilite-based crystal and the β-spodumene-based crystal to the precipitation proportion of the lithium disilicate-based crystal tends to be large. Therefore, ($Al_2O_3/Li_2O$) is preferably 0.15 or more, and more preferably 0.20 or more, from the viewpoint of setting the precipitation proportion of each crystal to the above preferred range. ($Al_2O_3/Li_2O$) is preferably 0.50 or less, and more preferably 0.36 or less, from the same viewpoint.

$P_2O_5$ is a component that serves as a crystal nucleus of the lithium disilicate-based crystal. The content of $P_2O_5$ is preferably 0.5% or more, more preferably 0.7% or more, and still more preferably 1.0% or more, from the viewpoint of precipitating the lithium disilicate-based crystal. The content of $P_2O_5$ is preferably 2.5% or less, more preferably 2.0% or less, still more preferably 1.8% or less, and particularly preferably 1.6% or less, from the viewpoint of improving the acid resistance. Note that, $P_2O_5$ may influence the precipitation of not only the lithium disilicate-based crystal but also at least one crystal of the virgilite-based crystal and the β-spodumene-based crystal. This is because $P_2O_5$ may be a crystal nucleus of these crystals, and the residual glass that has changed due to the generation of the lithium disilicate type crystal may influence the generation of these crystals.

$ZrO_2$ is a component that can increase the surface compressive stress of the chemically strengthened glass, and is also a component that can act as a nucleating agent. In the glass ceramic according to the present embodiment, $ZrO_2$ is preferably 0.6% or more, more preferably 0.7% or more, and still more preferably 0.8% or more. The content of $ZrO_2$ is preferably 2% or less, more preferably 1.5% or less, still more preferably 1.3% or less, and particularly preferably 1.1% or less, from the viewpoint of reducing the haze.

$B_2O_3$ is not an essential component, but is a component that can reduce the brittleness of the glass, improve the crack resistance, and facilitate the precipitation of the β-spodumene-based crystal. The glass ceramic according to the present embodiment may contain $B_2O_3$. In the case where the glass ceramic according to the present embodiment contains $B_2O_3$, the content thereof is preferably 0.2% or more, and more preferably 0.3% or more. The content of $B_2O_3$ is preferably 1% or less, and more preferably 0.7% or less, from the viewpoint of improving the acid resistance. From the viewpoint of reducing the haze, it is most preferable that the glass ceramic according to the present embodiment is substantially free of $B_2O_3$.

$Na_2O$ and $K_2O$ are not essential components, but are components that improve the meltability of the glass and are also components that improve the ion exchange performance. In order to obtain these effects, the glass ceramic according to the present embodiment may contain at least one of $Na_2O$ and $K_2O$. The total content of $Na_2O$ and $K_2O$ is preferably 0% or more, more preferably 0.5% or more, and still more preferably 0.7% or more, from the viewpoint of improving the meltability of the glass and from the viewpoint of improving the ion exchange performance. On the other hand, the total content of $Na_2O$ and $K_2O$ is preferably 3% or less, and more preferably 1% or less, from the viewpoint of preventing a decrease in chemical strengthening properties and chemical durability and reducing the haze.

$Na_2O$ is a component that forms a surface compressive stress layer in a chemical strengthening treatment using a potassium salt, and is a component that can improve the meltability of the glass. In the case where the glass ceramic according to the present embodiment contains $Na_2O$, the content thereof is preferably 0% or more, and more preferably 0.5% or more. On the other hand, in the case where the content of $Na_2O$ is too large, it may be difficult to increase a compressive stress of a portion relatively deep from the surface due to chemical strengthening. In addition, the haze may be relatively increased. From such a viewpoint, the content of $Na_2O$ is preferably 1.5% or less, and more preferably 1% or less.

$K_2O$ is a component that improves the meltability of the glass and is also a component that improves the ion exchange performance. In the case where the glass ceramic according to the present embodiment contains $K_2O$, the content thereof is preferably 0% or more, and more preferably 0.1% or more, from the viewpoint of obtaining the effect. The content of $K_2O$ is preferably 1% or less from the viewpoint of preventing a decrease in chemical strengthening properties and chemical durability, and it is preferable that $K_2O$ is not contained from the viewpoint of reducing the haze.

ZnO is not an essential component, but is a component that can improve the meltability of the glass. The glass ceramic according to the present embodiment may contain ZnO. In the case where the glass ceramic according to the present embodiment contains ZnO, the content of ZnO is preferably 0.1% or more, and more preferably 0.2% or more. The content of ZnO is preferably 1% or less, more preferably 0.7% or less, and still more preferably 0.5% or less, from the viewpoint of improving the weather resistance.

$SnO_2$ is not an essential component, but is a component that can lower the melting temperature and remove fine bubbles from the glass. The glass ceramic according to the present embodiment may contain $SnO_2$. In the case where the glass ceramic according to the present embodiment contains $SnO_2$, the content of $SnO_2$ is preferably 0.1% or more, and more preferably 0.5% or more. The content of $SnO_2$ is preferably 1% or less, and more preferably 0.9% or less, from the viewpoint of reducing coloration.

In the glass ceramic according to the present embodiment, a sum of molar proportions of $P_2O_5$, $ZrO_2$, $B_2O_3$, $Na_2O$, $K_2O$, ZnO, and $SnO_2$ is preferably 5% or less with respect to a sum of molar proportions of $Li_2O$, $Al_2O_3$ and $SiO_2$. This means that, in the glass ceramic according to the present embodiment, the total proportion of components that constitutes the lithium disilicate-based crystal, the virgilite-based crystal, and the β-spodumene-based crystal, that is, $Li_2O$, $Al_2O_3$ and $SiO_2$, is relatively large. Accordingly, a glass ceramic containing the lithium disilicate-based crystal and at least one of the virgilite-based crystal and the β-spodumene-based crystal is easily obtained, and the precipitation proportion of these crystals can be increased, and the degree of crystallinity can be easily increased. The sum of molar proportions of $P_2O_5$, $ZrO_2$, $B_2O_3$, $Na_2O$, $K_2O$, ZnO, and $SnO_2$ is more preferably 4% or less, and still more preferably 3% or less, with respect to the sum of molar proportions of $Li_2O$, $Al_2O_3$ and $SiO_2$. On the other hand, the above ratio is preferably 0.7% or more from the viewpoint of nucleation.

$Nb_2O_5$, $Ta_2O_5$, $Gd_2O_3$, and $CeO_2$ are components that prevent solarization of the glass and are components that improve the meltability. The glass ceramic according to the present embodiment may contain at least one or more of these components. In the case where the glass ceramic according to the present embodiment contains these components, a total content thereof is preferably 0.03% or more, more preferably 0.1% or more, still more preferably 0.3% or more, particularly preferably 0.5% or more, even more preferably 0.8% or more, and most preferably 1% or more. On the other hand, in the case where the total content is too large, it is difficult to increase the compressive stress value during a chemical strengthening treatment. From such a viewpoint, the total content of these components is preferably 3% or less, more preferably 2.5% or less, still more preferably 2% or less, particularly preferably 1.5% or less, even more preferably 1% or less, and most preferably 0.5% or less.

$Fe_2O_3$ is a component that can improve the meltability of the glass by absorbing heat rays. In the case of producing the glass in mass using a large melting furnace, the glass ceramic according to the present embodiment preferably contains $Fe_2O_3$. In this case, the content of $Fe_2O_3$ is preferably 0.002% or more, more preferably 0.003% or more, still more preferably 0.005% or more, particularly preferably 0.007% or more, even more preferably 0.008% or more, and most preferably 0.01% or more, in wt% in terms of oxides. On the other hand, when $Fe_2O_3$ is excessively contained, coloration occurs, and thus the content thereof is preferably 0.3% or less, more preferably 0.04% or less, still more preferably 0.03% or less, particularly preferably 0.025% or less, even more preferably 0.02% or less, and most preferably 0.015% or less in wt% in terms of oxides, from the viewpoint of improving the transparency of the glass.

Note that, here, all iron oxides in the glass have been described as $Fe_2O_3$, but actually, Fe (III) in an oxidized state and Fe (II) in a reduced state are mixed generally. Among them, Fe (III) causes yellow coloring, Fe (II) causes blue coloring, and green coloring occurs in the glass depending on the balance therebetween.

Further, the glass ceramic according to the present embodiment may contain a coloring component within a range not impairing the effects of the present invention. Preferred examples of the coloring component include $Co_3O_4$, $MnO_2$, NiO, CuO, $Cr_2O_3$, $V_2O_5$, $Bi_2O_3$, $SeO_2$, $CeO_2$, $Er_2O_3$, and $Nd_2O_3$.

The content of the coloring component in total is preferably 5% or less, more preferably 4% or less, still more preferably 3% or less, particularly preferably 2% or less, and even more preferably 1% or less in percentage in terms of oxides. In the case where it is desired to increase the transmittance of the glass, it is preferable that the glass ceramic according to the present embodiment is substantially free of these components.

$SO_3$, a chloride, and a fluoride may be appropriately contained as a refining agent or the like during melting of the glass. $As_2O_3$ is preferably not contained. In the case where $Sb_2O_3$ is contained, the content thereof is preferably 0.3% or less, and more preferably 0.1% or less, and it is most preferable that $Sb_2O_3$ is not contained.

Specific examples of a preferred composition of the glass ceramic according to the present embodiment (the base glass of the glass ceramic) include, but are not limited to, the following examples.

In the glass ceramic, the composition of the base glass contains, in mol% in terms of oxides,

65% to 75% of $SiO_2$,
23% to 25% of $Li_2O$,
4% to 8% of $Al_2O_3$,
0.5% to 2.5% of $P_2O_5$,
0.6% to 2% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$.

In the glass ceramic, the composition of the base glass contains, in mol% in terms of oxides,

65% to 75% of $SiO_2$,

23% to 25% of $Li_2O$,
4% to 8% of $Al_2O_3$,
0.5% to 2.5% of $P_2O_5$,
0.6% to 2% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 5% or less with respect to a sum of molar proportions of $Li_2O$, $Al_2O_3$ and $SiO_2$.

In the glass ceramic, the composition of the base glass contains, in mol% in terms of oxides,

65% to 75% of $SiO_2$,
23% to 25% of $Li_2O$,
4% to 8% of $Al_2O_3$,
0.7% to 2.5% of $P_2O_5$,
0.6% to 1.1% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 4% or less with respect to a sum of molar proportions of $Li_2O$, $Al_2O_3$ and $SiO_2$.

(Physical Properties)

The glass ceramic according to the present embodiment has a Young's modulus of preferably 100 GPa or more, more preferably 102 GPa or more, and still more preferably 105 GPa or more, from the viewpoint of preventing warpage caused by chemical strengthening and improving the fracture toughness. The Young's modulus is not particularly limited in upper limit value, and the Young's modulus may be, for example, 120 GPa or less. The Young's modulus can be measured by using, for example, an ultrasonic method.

The base glass (amorphous glass) of the glass ceramic according to the present embodiment has a glass transition temperature of preferably 400°C or higher from the viewpoint of ease of handling in a process of producing the glass ceramic. On the other hand, the glass transition temperature is preferably 600°C or lower from the viewpoint of facilitating a cooling process. The glass transition temperature can be determined, for example, based on a DSC curve measured by using a differential scanning calorimeter.

The base glass (amorphous glass) of the glass ceramic has a devitrification temperature of preferably 1200°C or lower, and more preferably 1150°C or lower, from the viewpoint of ease of preparation of the base glass. The devitrification temperature is not particularly limited in lower limit value, and the devitrification temperature may be, for example, 1000°C or higher. The devitrification temperature of the glass is an average value of a maximum temperature at which crystals are precipitated on the surface and the inside of the glass and a minimum temperature at which crystals do not precipitate when pulverized glass particles are charged into a platinum dish and subjected to a heat treatment for 17 hours in an electric furnace controlled at a constant temperature and observation is performed using an optical microscope on the sample after the heat treatment.

Regarding a devitrification viscosity $\eta$ [dPa·s] of the base glass (amorphous glass) of the glass ceramic, a log $\eta$ value is preferably 2.5 or more, and more preferably 30 or more, from the viewpoint of ease of continuous production. The log $\eta$ is not particularly limited in upper limit value, and the log $\eta$ may be, for example, 4 or less. The devitrification viscosity $\eta$ in the present description is a viscosity value at the devitrification temperature, and is determined by using a cylinder rotation method.

(Shape)

The shape of the glass ceramic according to the present embodiment is not particularly limited, and is preferably, for example, a sheet shape. In the case where the glass ceramic according to the present embodiment has a sheet shape (glass sheet), the sheet thickness (t) thereof is, for example, 2 mm or less, preferably 1.5 mm or less, more preferably 1 mm or less, still more preferably 0.9 mm or less, particularly preferably 0.8 mm or less, still more preferably 0.7 mm or less, and most preferably 0.6 mm or less, from the viewpoint of improving the chemical strengthening effect. In addition, the sheet thickness is, for example, preferably 0.1 mm or more, more preferably 0.2 mm or more, still more preferably 0.3 mm or more, even more preferably 0.35 mm or more, particularly preferably 0.4 mm or more, and more particularly preferably 0.5 mm or more, from the viewpoint of obtaining a sufficient strength increasing effect through a chemical strengthening treatment.

The shape of the glass ceramic according to the present embodiment may be a shape other than a sheet shape depending on a product to be applied, an application, or the like. In addition, the glass sheet may have an edged shape or the like in which a thickness of an outer periphery is different. In addition, a form of the glass sheet is not limited thereto, and for example, two main surfaces may not be parallel to each other. In addition, one or both of the two main surfaces may be entirely or partially curved. More specifically, the glass sheet may be, for example, a flat sheet-shaped glass sheet having no warpage or a curved glass sheet having a curved surface.

(Chemically Strengthened Glass)

A chemically strengthened glass according to the present embodiment is obtained by subjecting the above glass ceramic according to the present embodiment to chemical strengthening. That is, a base composition of the chemically strengthened glass according to the present embodiment is the same as the composition of the above glass ceramic according to the present embodiment, and a preferred composition range is also the same.

In the case where the chemically strengthened glass has, for example, a sheet shape, the content proportion of an alkali metal element is different between a surface layer and a center in the thickness direction. On the other hand, the glass composition in the deepest portion from the surface of the chemically strengthened glass is the same as the base composition of the chemically strengthened glass except for a case where an extreme ion exchange treatment is performed. In the case where the chemically strengthened glass has a sheet shape, the deepest portion from the glass surface is, for example, a depth of 1/2 of the sheet thickness t.

When the glass ceramic according to the present embodiment is subjected to chemical strengthening, the strength can be increased. Then, the crystal contained in the chemically strengthened glass according to the present embodiment and the content thereof are the same as those of the glass ceramic according to the present embodiment except for a case where an extreme ion exchange treatment or the like is performed. That is, the chemically strengthened glass according to the present embodiment is excellent in drop strength and transparency for the same reason as for the glass ceramic according to the present embodiment. Both of a relatively large fracture toughness value $K_{IC}$ and being chemically strengthened contribute to increasing the strength of the chemically strengthened glass. However, these two are different in that a glass having a relatively large fracture toughness value $K_{IC}$ has large strength throughout the bulk, while the chemically strengthened glass contributes greatly to the strength near the surface which is a starting point of a crack. The chemically strengthened glass according to the present embodiment has a relatively large fracture toughness value and is subjected to chemical strengthening, and is thus a chemically strengthened glass that has both of these properties and is excellent in strength.

Examples of the chemically strengthened glass according to the present embodiment include a chemically strengthened glass according to a third embodiment and a chemically strengthened glass according to a fourth embodiment below.

The chemically strengthened glass according to the third embodiment includes a compressive stress layer at a surface, in which a surface compressive stress value CS is 150 MPa or more, at least one of a lithium disilicate type crystal and a solid solution crystal thereof, at least one of a virgilite type crystal and a solid solution crystal thereof, and a residual glass phase are contained, a fracture toughness value $K_{IC}$ is 1.0 MPa·m$^{0.5}$ or more, and a haze value in terms of a thickness of 0.7 mm is 0.8% or less, and the chemically strengthened glass is a glass ceramic. That is, the above chemically strengthened glass is a chemically strengthened glass which is the glass ceramic according to the first embodiment.

The chemically strengthened glass according to the fourth embodiment includes a compressive stress layer at a surface, in which a surface compressive stress value CS is 100 MPa or more, at least one of a lithium disilicate type crystal and a solid solution crystal thereof, at least one of a β-spodumene type crystal and a solid solution crystal thereof, and a residual glass phase are contained, a fracture toughness value $K_{IC}$ is 1.2 MPa·m$^{0.5}$ or more, a haze value in terms of a thickness of 0.7 mm is 2.0% or less, and the chemically strengthened glass is a glass ceramic. That is, the above chemically strengthened glass is a chemically strengthened glass which is the glass ceramic according to the second embodiment.

It is preferable that the base composition of the chemically strengthened glass according to the present embodiment contains, in mol% in terms of oxides,

65% to 75% of $SiO_2$,
23% to 25% of $Li_2O$,
4% to 8% of $Al_2O_3$,
0.5% to 2.5% of $P_2O_5$,
0.6% to 2% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and
a sum of molar proportions of $P_2O_5$, $ZrO_2$, $B_2O_3$, $Na_2O$, $K_2O$, ZnO, and $SnO_2$ is 5% or less with respect to a sum of molar proportions of $Li_2O$, $Al_2O_3$ and $SiO_2$. A more preferred range of the base composition of the chemically strengthened glass is the same as the preferred range of the composition of the above glass ceramic or the base glass of the glass ceramic.

In the chemically strengthened glass according to the third embodiment, the surface compressive stress value CS is 150 MPa or more, more preferably 160 MPa or more, still more preferably 170 MPa or more, and even more preferably 180 MPa or more.

In the chemically strengthened glass according to the fourth embodiment, the surface compressive stress value CS is 100 MPa or more, preferably 140 MPa or more, more preferably 150 MPa or more, still more preferably 160 MPa or more, and even more preferably 170 MPa or more.

The surface compressive stress value CS is not particularly limited in upper limit value, and the surface compressive stress value Cs may be, for example, 1400 MPa or less.

In a stress profile of the chemically strengthened glass according to the present embodiment, a compressive stress value $CS_{50}$ at a depth of 50 $\mu$m from the surface is preferably 40 MPa or more, and more preferably 50 MPa or more. When the $CS_{50}$ is large, the chemically strengthened glass hardly cracks at the time of being scratched due to drop or the like. The $CS_{50}$ is not particularly limited in upper limit value, and the $CS_{50}$ may be, for example, 150 MPa or less.

In the chemically strengthened glass according to the present embodiment, the internal tensile stress value CT is preferably 40 MPa or more, and more preferably 50 MPa or more. When the CT is the above value or more, the compressive stress near the surface increases, and the strength increases. As long as the effects of the present invention are exhibited, the CT is not particularly limited in upper limit value, and the CT is, for example, preferably 150 MPa or less, and more preferably 120 MPa or less.

In the chemically strengthened glass according to the present embodiment, a compressive stress layer depth DOL is preferably 0.3t or less since in the case where it is too large with respect to the thickness t (mm), the CT may be too large. In addition, the DOL is preferably 0.1t or more, and more preferably 0.2t or more, from the viewpoint of increasing the strength. Note that, a preferred sheet thickness (t) and a preferred shape of the chemically strengthened glass according to the present embodiment are the same as the preferred sheet thickness (t) and the preferred shape of the above glass ceramic according to the present embodiment.

<Method for Producing Glass Ceramic and Chemically Strengthened Glass>

The chemically strengthened glass according to the present embodiment can be produced by subjecting the above glass ceramic according to the present embodiment to a chemical strengthening treatment. In addition, the glass ceramic according to the present embodiment can be produced by subjecting the amorphous glass (the base glass of the glass ceramic) to a heat treatment for crystallization.

(Production of Amorphous Glass)

The amorphous glass can be produced, for example, by the following method. Note that, the production method described below is an example in the case of producing a sheet-shaped glass ceramic and a sheet-shaped chemically strengthened glass.

In order to obtain a glass having a preferred composition, glass raw materials are blended, and then heated and melted in a glass melting furnace. Thereafter, the molten glass is homogenized by bubbling, stirring, addition of a refining agent, and the like, and formed into a glass sheet having a predetermined thickness by using a known forming method, followed by annealing. Alternatively, the molten glass may be formed into a block shape, followed by annealing, and cut into a sheet shape. Note that, in order to prevent nucleation during the preparation of the amorphous glass, it is preferable to slowly cool the glass at a temperature lower than the glass transition point by several tens of degrees. In addition, when the surface is scratched during processing or the like, the scratch will be the starting point for inducing surface crystallization, and therefore it is preferable to perform a treatment such that the scratch is not provided on the surface as much as possible.

Here, a preferred glass composition of the amorphous glass is the same as the preferred composition of the above glass ceramic or the base glass of the glass ceramic.

(Crystallization Treatment)

The amorphous glass obtained by the above procedure is subjected to a heat treatment to obtain a glass ceramic.

A method of the heat treatment is not particularly limited, and for example, the following method is preferred.

It is preferable that the heat treatment includes a plurality of stages of heat treatment, the plurality of stages of heat treatment include a first stage of heat treatment at 500°C to 540°C for 10 minutes to 24 hours and a final stage of heat treatment at 730°C to 860°C for 10 minutes to 24 hours, and a temperature increase rate and a temperature decrease rate in each stage of heat treatment are 5°C/min to 120°C/min. Note that, the plurality of stages of heat treatment refers to performing a heat treatment of holding a predetermined temperature range for a predetermined time a plurality of times while changing the temperature range.

That is, the heat treatment preferably includes at least two stages of heat treatment, and from the viewpoint of preventing haze, more preferably includes three stages.

In the plurality of stages of heat treatment, the first stage of heat treatment is preferably a heat treatment at 500°C to 540°C for 10 minutes to 24 hours. The temperature range in the first stage of heat treatment is preferably a temperature range in which a crystal nucleation rate increases in the glass composition. In addition, the holding time in the first stage of heat treatment is preferably a relatively long period of time to generate a sufficient number of crystal nuclei. When a large number of crystal nuclei are generated, a size of each crystal is reduced, and a glass ceramic having high transparency is easily obtained.

From such viewpoints, the temperature range in the first stage of heat treatment is preferably 500°C to 540°C, and more preferably 520°C to 540°C.

In addition, the holding time in the first stage of heat treatment is preferably 10 minutes to 24 hours, and more preferably 2 hours to 10 hours.

In the plurality of stages of heat treatment, the final stage of heat treatment is preferably a heat treatment at 730°C or more and lower than 800°C for 2 hours to 8 hours or at 830°C to 860°C for 10 minutes to 60 minutes. The temperature range in the final stage of heat treatment is preferably a temperature range in which a crystal nucleation rate increases in the glass composition. The inventors of the present invention have found that in the case of performing a heat treatment at a temperature range of 800°C or higher for a relatively long period of time in the final stage of heat treatment, $\beta$-spodumene is more likely to be generated, but this tends to increase the haze. From such viewpoints, the final stage of heat treatment is preferably at 730°C or more and lower than 800°C for 2 hours to 8 hours. On the other hand, even when the temperature range is 800°C or higher, in a heat treatment for a relatively short period of time, $\beta$-spodumene is likely to be generated, and an increase in haze is prevented. In this case, the final stage of heat treatment is preferably a heat treatment at 830°C to 860°C for 10 minutes to 60 minutes. Therefore, as described above, the final stage of heat treatment is preferably a heat treatment at 730°C or more and lower than 800°C for 2 hours to 8 hours or at 830°C to 860°C for 10 minutes to 60 minutes.

In the case where the final stage of heat treatment is a heat treatment at 730°C or more and lower than 800°C for 2 hours to 8 hours, the temperature range is more preferably 760°C to 790°C, and the holding time is more preferably 1 hour to 6 hours.

In the case where the final stage of heat treatment is a heat treatment at 830°C to 860°C for 10 minutes to 60 minutes, the temperature range is more preferably 840°C to 850°C, and the holding time is more preferably 15 minutes to 40 minutes.

In the case where the heat treatment includes three or more stages of heat treatment, that is, in the case where a further heat treatment is provided between the first stage and the final stage, the heat treatment is preferably a heat treatment at 540°C to 650°C for 10 minutes to 24 hours, and more preferably a heat treatment at 580°C to 630°C for 30 minutes to 6 hours, from the viewpoint of generating a precursor crystal.

The temperature increase rate and the temperature decrease rate in each stage of heat treatment are preferably 5°C/min to 120°C/min. The temperature increase rate and the temperature decrease rate are preferably 5°C/min or more since a crystal growth rate within the material can be followed. On the other hand, the temperature increase rate and the temperature decrease rate are preferably 120°C/min or less since material deformation can be prevented.

Here, particularly in the case of producing the glass ceramic according to the second embodiment, the temperature increase rate when the temperature is increased to the temperature range in the final stage of heat treatment is preferably relatively large, and specifically, 50°C/min to 120°C/min is preferred. Accordingly, it is easy to precipitate the $\beta$-spodumene-based crystal in the glass ceramic while maintaining the transparency. The reason for this is thought to be that the $\beta$-spodumene-based crystal can be generated while preventing a great change in structure shape. It is more preferable to set the final stage of heat treatment to a heat treatment at 830°C to 860°C for 10 minutes to 60 minutes and to set the temperature increase rate when the temperature is increased to the temperature range in the final stage of heat treatment to 50°C/min to 120°C/min, from the viewpoint of precipitating the β-spodumene-based crystal while reducing the haze.

Note that, as a crystallization form, volume crystallization is preferred from the viewpoint of preventing orientation of precipitated crystals which causes light scattering. For example, when the obtained glass ceramic is observed using an optical microscope, in the case where a continuous structure is observed to be formed from an interface between the glass and air, the crystallization form is surface crystallization, and in the case where crystallization occurs but no surface crystallization is observed, it can be determined that the crystallization form is volume crystallization In order to obtain a glass ceramic in which the crystallization form is volume crystallization, it is thought that conditions such as the above compositions and heat treatments are adjusted within preferred ranges.

The molten glass may be homogenized and formed into a glass sheet having a predetermined thickness, or the molten glass may be formed into a block shape and then continuously subjected to a crystallization treatment.

In the case where the sheet-shaped glass is subjected to a heat treatment, examples of a setter plate include a silicon carbide plate, a silicon nitride plate, a SiN plate, an alumina plate, a mullite cordierite plate, a mullite plate, and a glass ceramic plate. In addition, in order to reduce a temperature unevenness during the heat treatment, a material having a large thermal conductivity is preferred. The thermal conductivity of the setter plate is preferably 2 W/(m·K) or more, more preferably 20 W/(m·K) or more, and still more preferably 40 W/(m·K) or more.

A release agent can be used to prevent the glass from adhering to the setter plate. Examples of the release agent include an alumina cloth and a glass cloth. Further examples thereof include powdery boron nitride, alumina, and minerals. The release agent in a powder form may be mixed with a solvent and applied by spraying or the like. In the case of using a particulate release agent, an average particle diameter thereof is preferably 80 μm or less, more preferably 50 μm or less, and still more preferably 30 μm or less.

In the case where the glass is subjected to a heat treatment, the glass may be laminated in order to improve working efficiency. In the case of lamination, a release agent is preferably used between a glass and a glass. In addition, a setter plate may be placed between a glass and a glass.

The glass ceramic obtained by the above procedure is subjected to grinding and polishing if necessary to form a glass ceramic sheet. In the case where the glass ceramic sheet is cut into a predetermined shape and size or subjected to chamfering, it is preferable to perform cutting or chamfering before the chemical strengthening treatment is performed since a compressive stress layer is also formed on an end surface by the subsequent chemical strengthening treatment.

(Chemical Strengthening Treatment)

The chemical strengthening treatment is a treatment in which a glass is brought into contact with a metal salt by a method such as immersion of the glass in a molten solution of a metal salt (for example, potassium nitrate) containing metal ions having a large ion radius, and thereby metal ions having a small ion radius in the glass are substituted with the metal ions having a large ion radius. Here, the metal ions having a small ion radius are typically Na ions or Li ions. The metal ions having a large ion radius are typically Na ions or K ions, more specifically, Na ions or K ions for Li ions, and K ions for Na ions.

In order to increase the rate of the chemical strengthening treatment, it is preferable to use "Li-Na exchange" in which Li ions in the glass are exchanged with Na ions. In addition, in order to form a large compressive stress by ion exchange, it is preferable to use "Na-K exchange" in which Na ions in the glass are exchanged with K ions.

Examples of the molten salt for performing the chemical strengthening treatment include a nitrate, a sulfate, a carbonate, and a chloride. Among them, examples of the nitrate include lithium nitrate, sodium nitrate, potassium nitrate, cesium nitrate, and silver nitrate. Examples of the sulfate include lithium sulfate, sodium sulfate, potassium sulfate, cesium sulfate, and silver sulfate. Examples of the carbonate include lithium carbonate, sodium carbonate, and potassium carbonate. Examples of the chloride include lithium chloride, sodium chloride, potassium chloride, cesium chloride, and silver chloride. These molten salts may be used alone or in combination of plural types thereof.

As treatment conditions of the chemical strengthening treatment, a time, a temperature, and the like can be selected in consideration of a glass composition, a type of the molten salt, and the like. For example, the glass ceramic according to the present embodiment is preferably subjected to a chemical strengthening treatment at preferably 450°C or lower for preferably 20 hours or shorter.

The chemical strengthening treatment may be, for example, two-stage ion exchange as follows. First, the glass ceramic according to the present embodiment is immersed in a metal salt (for example, sodium nitrate) containing Na ions at preferably about 350°C to 500°C for preferably about 0.1 hours to 10 hours. This can cause ion exchange between Li ions in the glass ceramic and Na ions in the metal salt, thereby forming a relatively deep compressive stress layer.

Next, the glass ceramic is immersed in a metal salt (for example, potassium nitrate) containing K ions at preferably about 350°C to 500°C for preferably about 0.1 hours to 10 hours. Accordingly, a large compressive stress is generated in a portion of the compressive stress layer formed in the previous treatment, for example, within a depth of about 10 μm. According to such a two-stage treatment, a stress profile having a large surface compressive stress value is easily obtained.

(Application)

The glass ceramic according to the present embodiment and the chemically strengthened glass according to the present embodiment are excellent in both drop strength and transparency, and are therefore useful as a cover glass or a circuit board for use in electronic devices. The glass ceramic according to the present embodiment and the chemically strengthened glass according to the present embodiment are particularly useful as a cover glass for use in mobile devices such as a mobile phone, a smart phone, a personal digital assistant (PDA), and a tablet terminal. Further, the glass ceramic according to the present embodiment and the chemically strengthened glass according to the present embodiment are also useful for applications which are not intended to be carried such as a cover glass of a display device such as a television (TV), a personal computer (PC), and a touch panel, an elevator wall surface, or a wall surface (full-screen display) of a construction such as a house and a building, a building material such as a window glass, a table top, an interior of an automobile, an airplane, or the like, and a cover glass thereof, and a casing having a curved surface shape that is not a sheet shape by bending or forming.

Examples

Hereinafter, the present invention will be described in detail with reference to Examples, but the present invention is not limited thereto.

Glass raw materials were blended to have the compositions shown in Table 1 and Table 2 in mol% in terms of oxides, and weighed to obtain 400 g of glass. Next, the mixed raw materials were charged into a platinum crucible, followed by charging into an electric furnace at 1500°C to 1700°C, melted for about 3 hours, defoamed, and homogenized.

The obtained molten glass was poured into a metal mold, held at a temperature about 50°C higher than the glass transition point for 1 hour, and then cooled to room temperature at a rate of 0.5°C/min, to obtain a glass block. The obtained glass block was cut, ground, and finally mirror-polished on both surfaces to obtain a glass sheet having a thickness of 2 mm (amorphous glass 0 to amorphous glass 12).

Table 1 and Table 2 show compositions of the amorphous glass 0 to the amorphous glass 12, and the glass transition temperature, the devitrification temperature, and the devitrification viscosity $\eta$ (log $\eta$) of each amorphous glass. The methods for measuring the physical properties are as follows. Note that, the blank spaces in Table 1 and Table 2 indicate that the corresponding physical property is not measured.

(Glass Transition Temperature)

The glass transition temperature was determined by using a method of pulverizing the amorphous glass using an agate mortar, charging about 80 mg of powder into a platinum cell, performing heating from room temperature to 1100°C at a temperature increase rate of 10°C/min, and measuring a DSC curve using a differential scanning calorimeter (DSC3300SA manufactured by Bruker Corporation).

(Devitrification Temperature)

The pulverized glass particles were charged into a platinum dish and subjected to a heat treatment for 17 hours in an electric furnace controlled at a constant temperature. In observation using an optical microscope on the sample after the heat treatment, the average value of the maximum temperature at which crystals were precipitated on the surface and the inside of the glass and the minimum temperature at which crystals did not precipitate was determined as the devitrification temperature.

(Devitrification Viscosity $\eta$)

The devitrification viscosity $\eta$ was measured by using a rotation cylinder method.

Table 1

| Composition proportion (mol%) | Amorphous glass 0 | Amorphous glass 1 | Amorphous glass 2 | Amorphous glass 3 | Amorphous glass 4 | Amorphous glass 5 | Amorphous glass 6 |
|---|---|---|---|---|---|---|---|
| $SiO_2$ | 68.6 | 68.3 | 68.3 | 68.3 | 68.4 | 68.3 | 70.0 |
| $Al_2O_3$ | 4.4 | 4.4 | 4.9 | 5.4 | 4.9 | 4.9 | 4.5 |
| $Li_2O$ | 25.0 | 24.9 | 24.4 | 23.9 | 24.4 | 21.5 | 25.5 |
| $ZrO_2$ | 1.0 | 1.0 | 1.0 | 1.0 | 1.0 | 1.0 | 0.0 |
| $TiO_2$ | 0.0 | 0.0 | 0.0 | 0.0 | 0.0 | 0.0 | 0.0 |
| $SnO_2$ | 0.0 | 0.5 | 0.5 | 0.5 | 0.0 | 0.5 | 0.0 |
| $P_2O_5$ | 1.0 | 1.0 | 1.0 | 1.0 | 1.1 | 1.0 | 0.0 |
| $B_2O_3$ | 0.0 | 0.0 | 0.0 | 0.0 | 0.0 | 0.0 | 0.0 |
| $ZnO$ | 0.0 | 0.0 | 0.0 | 0.0 | 0.3 | 0.0 | 0.0 |
| $Na_2O$ | 0.0 | 0.0 | 0.0 | 0.0 | 0.0 | 2.9 | 0.0 |
| $Li_2O+Al_2O_3$ | 29.4 | 29.3 | 29.3 | 29.3 | 29.3 | 26.3 | 30.0 |
| $Al_2O_3/Li_2O$ | 0.18 | 0.18 | 0.20 | 0.22 | 0.20 | 0.23 | 0.18 |
| $(P_2O_5+ZrO_2+B_2O_3+Na_2O+ K_2O+ZnO+SnO_2)/ (Li_2O+Al_2O_3+SiO_2)$ | 2.0% | 2.5% | 2.5% | 2.5% | 2.4% | 5.7% | 0.0% |
| Glass transition temperature (°C) | | | 480 | | | | |
| Devitrification temperature (°C) | | 1060 | | | | | |
| Devitrification viscosity log η | | 3.3 | | | | | |

Table 2

| Composition proportion (mol%) | Amorphous glass 7 | Amorphous glass 8 | Amorphous glass 9 | Amorphous glass 10 | Amorphous glass 11 | Amorphous glass 12 |
|---|---|---|---|---|---|---|
| $SiO_2$ | 64.1 | 64.1 | 68.6 | 68.6 | 70.0 | 67.9 |
| $Al_2O_3$ | 4.3 | 4.3 | 4.9 | 4.9 | 10.0 | 6.8 |
| $Li_2O$ | 27.7 | 27.7 | 24.5 | 24.5 | 20.0 | 22.3 |
| $ZrO_2$ | 0.0 | 3.8 | 0.5 | 0.5 | 0.0 | 1.0 |
| $TiO_2$ | 0.0 | 0.0 | 0.0 | 0.0 | 0.0 | 0.0 |
| $SnO_2$ | 3.8 | 0.0 | 0.5 | 0.5 | 0.0 | 1.0 |
| $P_2O_5$ | 0.0 | 0.0 | 1.0 | 1.0 | 0.0 | 1.0 |
| $B_2O_3$ | 0.0 | 0.0 | 0.0 | 0.1 | 0.0 | 0.0 |
| $ZnO$ | 0.0 | 0.0 | 0.0 | 0.0 | 0.0 | 0.0 |
| $Na_2O$ | 0.0 | 0.0 | 0.0 | 0.0 | 0.0 | 0.0 |
| $Li_2O+Al_2O_3$ | 32.1 | 32.1 | 29.4 | 29.4 | 30.0 | 29.1 |
| $Al_2O_3/Li_2O$ | 0.16 | 0.16 | 0.20 | 0.20 | 0.50 | 0.30 |
| $(P_2O_5+ZrO_2+B_2O_3+Na_2O+K_2O+ZnO+SnO_2)/(Li_2O+Al_2O_3+SiO_2)$ | 4.0% | 4.0% | 2.0% | 2.1% | 0.0% | 3.1% |
| Glass transition temperature (°C) | | | | | | |
| Devitrification temperature (°C) | | | | | | |
| Devitrification viscosity log $\eta$ | | | | | | |

Each of the obtained amorphous glasses was subjected to a heat treatment to obtain glass ceramics in Example 1 to Example 23. That is, the amorphous glasses having the numbers shown in Tables 3 to 6 were subjected to a heat treatment under the conditions described in the "heat treatment condition" to obtain glass ceramics. For example, the description in the column "heat treatment condition" for the glass ceramic in Example 1 means that the first stage of heat treatment is increasing the temperature to 540°C at a temperature increase rate of 10°C/min and holding the temperature at 540°C for 4 hours, the second stage of heat treatment is increasing the temperature to 600°C at a temperature increase rate of 10°C/min and holding the temperature at 600°C for 4 hours, and the third stage of heat treatment is increasing the temperature to 780°C at a temperature increase rate of 10°C/min and holding the temperature at 780°C for 4 hours.

The physical properties described in Tables 3 to 6 were obtained from the obtained glass ceramics. The glass ceramics in Examples 1 to 5 and Examples 8 to 15 are Inventive Examples, and the glass ceramics in Examples 6, 7, and 16 to 23 are Comparative Examples.

The methods for measuring the physical properties are shown below.

(PXRD Measurement of Glass Ceramic)

The obtained glass ceramic was subjected to PXRD measurement by the following procedure to identify a crystal species.

(Preparation Conditions of PXRD Measurement Sample)

A glass ceramic sheet subjected to a SPDR method was pulverized using an agate mortar and an agate pestle, to give a powder for PXRD measurement.

(PXRD Measurement Conditions)

Powder X-ray diffraction was measured under the following conditions to identify the precipitated crystal.

For identification of the crystal species, a diffraction peak pattern recorded in an ICSD inorganic crystal structure database and an ICDD powder diffraction database was used.

Measurement device: SmartLab manufactured by Rigaku Corporation
Measurement method: concentration method
Tube voltage: 45 kV
Tube current: 200 mA
X-ray used: CuK$\alpha$ rays
Measurement range: 20 = 10° to 80°
Speed: 10°/min
Step: 0.02°

(Contents of Crystals and Residual Glass Phase)

The content (proportion) of each crystal in the glass ceramic was a crystal molar fraction of each crystal in consideration of a proportion at which the crystal molar fraction was maximized, the entire glass ceramic being taken as 100 mol%, and the crystal precipitated at the composition and the temperature being precipitated in a stoichiometric composition. In addition, the total of the crystal molar fractions of each crystal was subtracted from 100 mol% to obtain the proportion of the residual glass phase. Note that, in Example 14, the contents of the virgilite-based crystal and the β-spodumene-based crystal are shown as a total amount thereof.

(Crystallization Form)

The crystallization form was identified by using an optical microscope. In observation using an optical microscope, in the case where a continuous crystalline structure was observed to be formed from the interface between the material and air, the crystallization form was surface crystallization, and in the case where no surface crystallization was observed but a crystal peak was observed in the X-ray diffraction, the crystallization form was volume crystallization.

(Haze Value and Appearance)

The haze value [unit: %] of the glass ceramic under a C light source was measured using a haze meter (HZ-V3, manufactured by Suga Test Instruments Co., Ltd.). In addition, the appearance of the glass ceramic was visually checked.

(Young's Modulus E)

The Young's modulus of the glass was measured by using an ultrasonic method.

(Fracture Toughness Value $K_{IC}$)

The fracture toughness value $K_{IC}$ [unit: MPa·m$^{0.5}$] was measured by using the SEPB method or the DCDC method. The measurement using the SEPB method was performed in accordance with JIS R1607.
The measurement using the DCDC method was performed as follows. With reference to the method described in M. Y. He, M.R. Turner and A.G. Evans, Acta Metall. Mater. 43 (1995) 3453., by using the DCDC method, a sample having a shape shown in FIG. 1 and Autograph AGS-X5KN manufactured by SHIMADZU Corporation were used, a $K_I$-v curve showing the relationship between the stress intensity factor $K_I$ (unit: MPa·m$^{0.5}$) and the crack growth rate v (unit: m/s) as shown in FIG. 2 was measured, the obtained Region III data was regressed and extrapolated using a linear equation, and the stress intensity factor $K_I$ at 0.1 m/s was defined as the fracture toughness value $K_{IC}$. The measurement was performed under conditions of a relative humidity of 1% or less.
As described above, specific inflection was observed in the Region III in the $K_I$-v curve of the glass ceramic according to the present embodiment. FIG. 3 is a diagram showing a Region III in a $K_I$-v curve of the glass ceramic in Example 3. A region where the crack growth rate v is small is defined as a Region III-1 and a region where the crack growth rate v is large is defined as a Region III-2 in the $K_I$-v curve with the inflection point as a boundary, and the crack growth rate v is fitted to the stress intensity factor $K_I$ using an exponential function. In FIG. 3, the exponent value (x_Region III-1) of the exponential function on the Region III-1 side is 416.96x, and the exponent value (x_Region III-2) of the exponential function on the Region III-2 side is 64.125x. Therefore, the ratio (x_Region III-2/x_region III-1) is 0.15. Such specific inflection in the Region III in the $K_I$-v curve was also observed in Inventive Examples other than Example 3 (i.e., Example 8), and the ratio (x_Region III-2/x_region III-1) was less than 0.25 in all of Inventive Examples.

Table 3

| | | Example 1 | Example 2 | Example 3 |
|---|---|---|---|---|
| Amorphous glass | | 0 | 1 | 1 |
| Heat treatment condition | | 540°C, 4 hours (10°C/min) 600°C, 4 hours (10°C/min) 780°C, 4 hours (10°C/min) | 500°C, 4 hours (10°C/min) 600°C, 4 hours (10°C/min) 780°C, 4 hours (10°C/min) | 540°C, 4 hours (10°C/min) 600°C, 4 hours (10°C/min) 780°C, 4 hours (10°C/min) |
| Crystallization form | | Volume crystallization | Volume crystallization | Volume crystallization |
| $K_{IC}$ (DCDC method) | | - | - | 1.28 |
| $K_{IC}$ (SEPB method) | | - | 1.28 | 1.28 |
| Haze/appearance | | 0.47%/colorless and transparent | 0.77%/slightly milky white and transparent | 0.58%/slightly milky white and transparent |
| Precipitated crystal | | $Li_2Si_2O_5$, $LiAlSi_2O_6$ (Virgilite) | $Li_2Si_2O_5$, $LiAlSi_2O_6$ (Virgilite) | $Li_2Si_2O_5$, $LiAlSi_2O_6$ (Virgilite) |
| Proportion of maximum precipitated crystal | Lithium disilicate-based crystal | 61.8 mol% | 61.5 mol% | 61.5 mol% |
| | Virgilite-based crystal | 26.5 mol% | 26.3 mol% | 26.3 mol% |
| | β-Spodumene-based crystal | - | - | - |
| Residual component in case of $Li_2O$-$Al_2O_3$-$SiO_2$-based maximum precipitated crystal | | 12 mol% | 12.5 mol% | 12.5 mol% |
| Young's modulus (GPa) | | 107.7 | - | 108 |

Table 3 (continued)

| | Example 4 | Example 5 | Example 6 |
|---|---|---|---|
| Amorphous glass | 1 | 1 | 1 |
| Heat treatment condition | 560°C, 4 hours (10°C/min) 600°C, 4 hours (10°C/min) 780°C, 4 hours (10°C/min) | 540°C, 24 hours (10°C/min) 600°C, 4 hours (10°C/min) 780°C, 4 hours (10°C/min) | 540°C, 4 hours (10°C/min) 600°C, 4 hours (10°C/min) 800°C, 4 hours (10°C/min) |
| Crystallization form | Volume crystallization | Volume crystallization | Volume crystallization |
| $K_{IC}$ (DCDC method) | - | - | - |
| $K_{IC}$ (SEPB method) | - | - | - |
| Haze/appearance | 0.67%/slightly milky and transparent | 0.61%/slightly milky and transparent | 3.39%/slightly milky and transparent |
| Precipitated crystal | $Li_2Si_2O_5$, $LiAlSi_2O_6$ (Virgilite) | $Li_2Si_2O_5$, $LiAlSi_2O_6$ (Virgilite) | $Li_2Si_2O_5$, $LiAlSi_2O_6$ (Virgilite) |

(continued)

|  |  | Example 4 | Example 5 | Example 6 |
|---|---|---|---|---|
| Amorphous glass |  | 1 | 1 | 1 |
| Proportion of maximum precipitated crystal | Lithium disilicate-based crystal | 61.5 mol% | 61.5 mol% | 61.5 mol% |
|  | Virgilite-based crystal | 26.3 mol% | 26.3 mol% | 26.3 mol% |
|  | β-Spodumene-based crystal | - | - | - |
| Residual component in case of $Li_2O$-$Al_2O_3$-$SiO_2$-based maximum precipitated crystal |  | 12.5 mol% | 12.5 mol% | 12.5 mol% |
| Young's modulus (GPa) |  | - | - | - |

Table 4

|  |  | Example 7 | Example 8 | Example 9 |
|---|---|---|---|---|
| Amorphous glass |  | 2 | 2 | 3 |
| Heat treatment condition |  | 540°C, 4 hours (10°C/min) - 780°C, 4 hours (10°C/min) | 540°C, 4 hours (10°C/min) 600°C, 4 hours (10°C/min) 780°C, 4 hours (10°C/min) | 540°C, 4 hours (10°C/min) 600°C, 4 hours (10°C/min) 780°C, 4 hours (10°C/min) |
| Crystallization form |  | Volume crystallization | Volume crystallization | Volume crystallization |
| $K_{IC}$ (DCDC method) |  | - | 1.24 | - |
| $K_{IC}$ (SEPB method) |  | - | 1.24 | 1.20 |
| Haze/appearance |  | 2.65%/slightly milky and transparent | 0.38%/colorless and transparent | 0.28%/colorless and transparent |
| Precipitated crystal |  | $Li_2Si_2O_5$, $LiAlSi_2O_6$ (Virgilite) | $Li_2Si_2O_5$, $LiAlSi_2O_6$ (Virgilite) | $Li_2Si_2O_5$, $LiAlSi_2O_6$ (Virgilite) |
| Proportion of maximum precipitated crystal | Lithium disilicate-based crystal | 58.5 mol% | 58.5 mol% | 52.7 mol% |
|  | Virgilite-based crystal | 29.3 mol% | 29.3 mol% | 35.1 mol% |
|  | β-Spodumene-based crystal | - | - | - |
| Residual component in case of $Li_2O$-$Al_2O_3$-$SiO_2$-based maximum precipitated crystal |  | 12.5 mol% | 12.5 mol% | 12.5 mol% |
| Young's modulus (GPa) |  | - | 107.3 | 105.8 |
| Coefficient ($MPa^{-1} \cdot m^{-0.5}$) of exponential function in large crack growth rate region in KI-v curve |  | | $76 \pm 24$ | |

Table 4 (continued)

|  |  | Example 10 | Example 11 | Example 12 |
|---|---|---|---|---|
| Amorphous glass | | 4 | 4 | 4 |
| Heat treatment condition | | 540°C, 4 hours (10°C/min) 600°C, 4 hours (10°C/min) 720°C, 4 hours (10°C/min) | 540°C, 4 hours (10°C/min) 590°C, 4 hours (10°C/min) 780°C, 4 hours (10°C/min) | 540°C, 4 hours (10°C/min) 600°C, 4 hours (10°C/min) 780°C, 4 hours (10°C/min) |
| Crystallization form | | Volume crystallization | Volume crystallization | Volume crystallization |
| $K_{IC}$ (DCDC method) | | - | - | - |
| $K_{IC}$ (SEPB method) | | 1.17 | - | - |
| Haze/appearance | | 0.09%/colorless and transparent | 0.17%/colorless and transparent | 0.14%/colorless and transparent |
| Precipitated crystal | | $Li_2Si_2O_5$, LiAl$Si_2O_6$ (Virgilite) LiAl$Si_4O_{10}$ (Petalite) | $Li_2Si_2O_5$, LiAl$Si_2O_6$ (Virgilite) | $Li_2Si_2O_5$, LiAl$Si_2O_6$ (Virgilite) |
| Proportion of maximum precipitated crystal | Lithium disilicate-based crystal | - | 58.6 mol% | 58.6 mol% |
| | Virgilite-based crystal | - | 29.3 mol% | 29.3 mol% |
| | β-Spodumene-based crystal | - | - | - |
| Residual component in case of $Li_2O$-$Al_2O_3$-$SiO_2$-based maximum precipitated crystal | | 12.4 mol% | 12.4 mol% | 12.4 mol% |
| Young's modulus (GPa) | | - | - | 107 |
| Coefficient (MPa$^{-1}$·m$^{-0.5}$) of exponential function in large crack growth rate region in KI-v curve | | | | |

Table 5

|  | Example 13 | Example 14 | Example 15 |
|---|---|---|---|
| Amorphous glass | 4 | 4 | 1 |
| Heat treatment condition | 540°C, 4 hours (10°C/min) 640°C, 4 hours (10°C/min) 780°C, 4 hours (10°C/min) | 540°C, 4 hours (10°C/min) 640°C, 4 hours (10°C/min) 780°C, 8 hours (10°C/min) | 540°C, 4 hours (10°C/min) 600°C, 4 hours (10°C/min) 780°C, 4 hours (10°C/min) 850°C, 20 minutes (about 100°C/min) |
| Crystallization form | Volume crystallization | Volume crystallization | Volume crystallization |
| $K_{IC}$ (DCDC method) | - | - | - |
| $K_{IC}$ (SEPB method) | - | - | - |
| Haze/appearance | 0.18%/colorless and transparent | 0.38%/colorless and transparent | 1.78%/slightly milky and transparent |

(continued)

|  |  | Example 13 | Example 14 | Example 15 |
|---|---|---|---|---|
| Amorphous glass | | 4 | 4 | 1 |
| Precipitated crystal | | $Li_2Si_2O_5$, $LiAlSi_2O_6$ (Virgilite) | $Li_2Si_2O_5$, $LiAlSi_2O_6$ (Virgilite) | $Li_2Si_2O_5$, $LiAlSi_2O_6$ (Virgilite) $LiAlSi_2O_6$ (β-spodumene) |
| Proportion of maximum precipitated crystal | Lithium disilicate-based crystal | 58.6 mol% | 58.6 mol% | 61.5 mol% |
|  | Virgilite-based crystal | 29.3 mol% | 29.3 mol% | 26.3 mol% |
|  | β-Spodumene-based crystal | - | - | |
| Residual component in case of $Li_2O$-$Al_2O_3$-$SiO_2$-based maximum precipitated crystal | | 12.4 mol% | 12.4 mol% | 12.5 mol% |
| Young's modulus (GPa) | | - | - | - |
| Coefficient ($MPa^{-1} \cdot m^{-0.5}$) of exponential function in large crack growth rate region in KI-v curve | | | | |

Table 5 (continued)

|  |  | Example 16 | Example 17 | Example 18 |
|---|---|---|---|---|
| Amorphous glass | | 5 | 6 | 7 |
| Heat treatment condition | | 540°C, 4 hours (10°C/min) 600°C, 4 hours (10°C/min) 780°C, 4 hours (10°C/min) | 540°C, 4 hours (10°C/min) 600°C, 4 hours (10°C/min) 780°C, 4 hours (10°C/min) | 540°C, 4 hours (10°C/min) 600°C, 4 hours (10°C/min) 780°C, 4 hours (10°C/min) |
| Crystallization form | | Volume crystallization | Surface crystallization | Surface crystallization (inside is glass) |
| $K_{IC}$ (DCDC method) | | - | - | - |
| $K_{IC}$ (SEPB method) | | - | - | - |
| Haze/appearance | | -/yellowish and cloudy | -/colorless and transparent | -/slightly cloudy |
| Precipitated crystal | | $Li_2Si_2O_5$ | - | $Li_2SiO_3$, $LiAlSi_2O_6$ (Virgilite) |
| Proportion of maximum precipitated crystal | Lithium disilicate-based crystal | - | 63 mol% | - |
|  | Virgilite-based crystal | - | 27 mol% | - |
|  | β-Spodumene-based crystal | - | - | - |
| Residual component in case of $Li_2O$-$Al_2O_3$-$SiO_2$-based maximum precipitated crystal | | - | 0 mol% | - |
| Young's modulus (GPa) | | - | - | - |

(continued)

|  | Example 16 | Example 17 | Example 18 |
|---|---|---|---|
| Amorphous glass | 5 | 6 | 7 |
| Coefficient (MPa$^{-1}\cdot$m$^{-0.5}$) of exponential function in large crack growth rate region in KI-v curve |  |  |  |

Table 6

|  | Example 19 | Example 20 |
|---|---|---|
| Amorphous glass | 8 | 9 |
| Heat treatment condition | 540°C, 4 hours (10°C/min) 600°C, 4 hours (10°C/min) 780°C, 4 hours (10°C/min) | 540°C, 4 hours (10°C/min) 600°C, 4 hours (10°C/min) 780°C, 4 hours (10°C/min) |
| Crystallization form | Surface crystallization (inside is glass) | Volume crystallization |
| K$_{IC}$ (DCDC method) | - | - |
| K$_{IC}$ (SEPB method) | - | - |
| Haze/appearance | -/slightly cloudy | - |
| Precipitated crystal | Li$_2$SiO$_3$, LiAlSi$_2$O$_6$ (Virgilite) | Li$_2$Si$_2$O$_5$, LiAlSi$_2$O$_6$ (Virgilite) |
| Proportion of maximum precipitated crystal | Lithium disilicate-based crystal | - | - |
|  | Virgilite-based crystal | - | - |
|  | β-Spodumene-based crystal | - | - |
| Residual component in case of Li$_2$O-Al$_2$O$_3$-SiO$_2$-based maximum precipitated crystal | - | - |
| Young's modulus (GPa) | - | - |
| Coefficient (MPa$^{-1}\cdot$m$^{-0.5}$) of exponential function in large crack growth rate region in KI-v curve |  |  |

Table 6 (continued)

|  | Example 21 | Example 22 | Example 23 |
|---|---|---|---|
| Amorphous glass | 10 | 11 | 12 |
| Heat treatment condition | 540°C, 4 hours (10°C/min) 600°C, 4 hours (10°C/min) 740°C, 4 hours (10°C/min) | - - 830°C, 4 hours (10°C/min) | 540°C, 4 hours (10°C/min) 600°C, 4 hours (10°C/min) 740°C, 4 hours (10°C/min) |
| Crystallization form | Volume crystallization | Volume crystallization | Volume crystallization |
| K$_{IC}$ (DCDC method) | - | - | - |
| K$_{IC}$ (SEPB method) | - | - | - |
| Haze/appearance | -/white | -/white | -/white |

(continued)

| | | Example 21 | Example 22 | Example 23 |
|---|---|---|---|---|
| Amorphous glass | | 10 | 11 | 12 |
| Precipitated crystal | | $Li_2Si_2O_5$, $LiAlSi_2O_6$ (β-spodumene) | $LiAlSi_2O_6$ (β-spodumene) | - |
| Proportion of maximum precipitated crystal | Lithium disilicate-based crystal | 61.5 mol% | - | - |
| | Virgilite-based crystal | - | - | - |
| | β-Spodumene-based crystal | 26.3 mol% | 60 mol% | - |
| Residual component in case of $Li_2O$-$Al_2O_3$-$SiO_2$-based maximum precipitated crystal | | 12.5 mol% | 40 mol% | - |
| Young's modulus (GPa) | | 102.4 | - | - |
| Coefficient ($MPa^{-1} \cdot m^{-0.5}$) of exponential function in large crack growth rate region in KI-v curve | | | | |

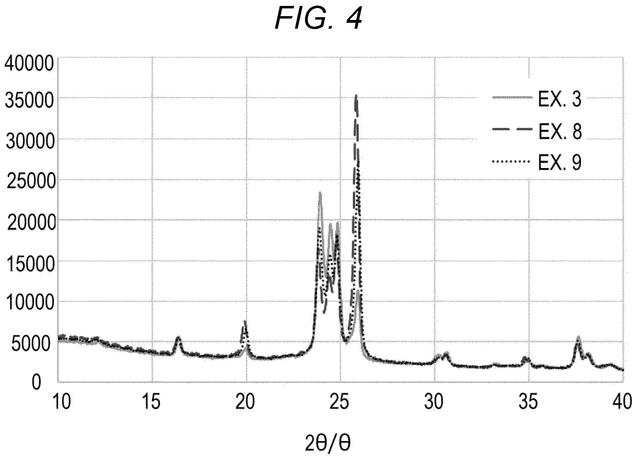

As seen from the results in Table 2, in Examples 1 to 5 and Examples 8 to 14, which are Inventive Examples, a glass ceramic having reduced haze is obtained. It can also be seen that the introduction of $P_2O_5$ induces volume crystallization from surface crystallization. It is also suggested that when the base glass of the glass ceramic is rich in $Al_2O_3$ and poor in $Li_2O$, the amount of the lithium disilicate type crystal tends to decrease and the amount of the virgilite type crystal tends to increase. This tendency can also be observed from graphs showing the results of the X-ray diffraction measurement for Examples 3, 8 and 9 shown in FIG. 4.

(Comparison of Haze Values under Heat Treatment Conditions)

Various types of amorphous glasses were subjected to a heat treatment under a plurality of different heat treatment conditions, a glass ceramic was obtained in each heat treatment, and the haze value of each glass ceramic was measured in the same manner as described above. The results are shown in Table 7. In Table 7, for example, the column "amorphous glass 1" shows the haze value (%) of the glass ceramic obtained by treating the amorphous glass 1 under each heat treatment condition.

Table 7

| Heat treatment condition/amorphous glass | | Amorphous glass 9 | Amorphous glass 1 | Amorphous glass 2 | Amorphous glass 3 | Amorphous glass 4 | Amorphous glass 10 |
|---|---|---|---|---|---|---|---|
| Condition 1 | 540°C, 4 h<br>600°C, 4 h<br>780°C, 4 h | 0.47 | 0.58 | 0.38 | 0.33 | 0.14 | Whitening and β-Spodumene is generated |
| Condition 2 | 540°C, 4 h<br>600°C, 4 h<br>780°C, 4 h<br>850°C, 20 min | | 1.78 β-Spodumene is partially generated | | | | |
| Condition 3 | 540°C, 4 h<br>600°C, 8 h<br>780°C, 4 h | | 0.5 | | | | |
| Condition 4 | 540°C, 4 h<br>600°C, 4 h<br>800°C, 4 h | | 3.4 β-Spodumene is partially generated | 4.37 β-Spodumene is partially generated | 6.86 β-Spodumene is partially generated | | |
| Condition 5 | 760°C, 6 h | 6.31 | | | | | |
| Condition 6 | 830°C, 6 h | 69.76 β-Spodumene is partially generated | | | | | |

As seen from the results in Table 7, β-spodumene tends to be generated more easily at a temperature of 800°C or higher, and the haze tends to increase as β-spodumene is generated. On the other hand, under the condition 2 in which a heat treatment at 850°C for a relatively short period of time is performed, β-spodumene is generated, but it is found that the increase in haze is relatively small.

(Chemical Strengthening Properties)

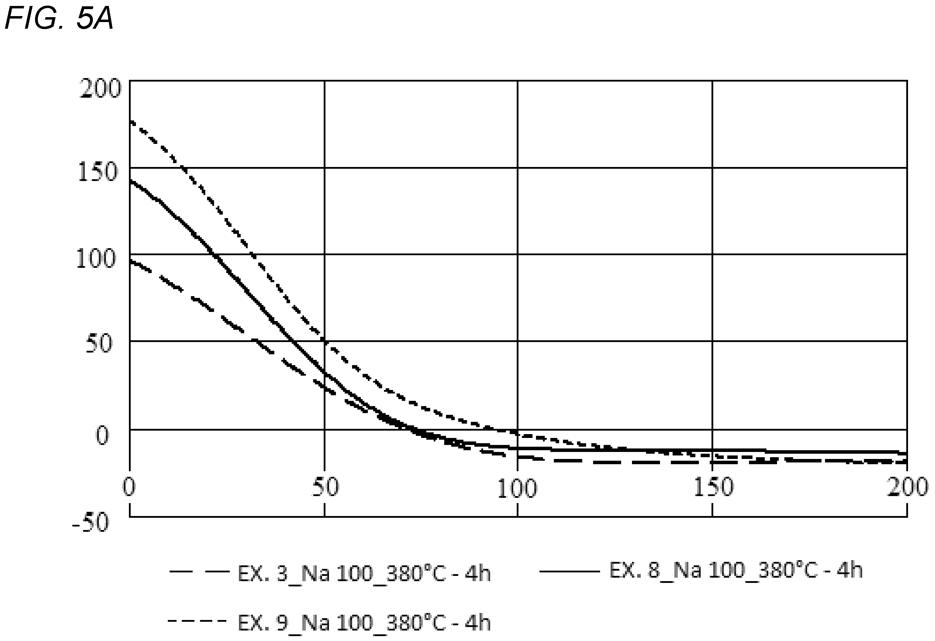

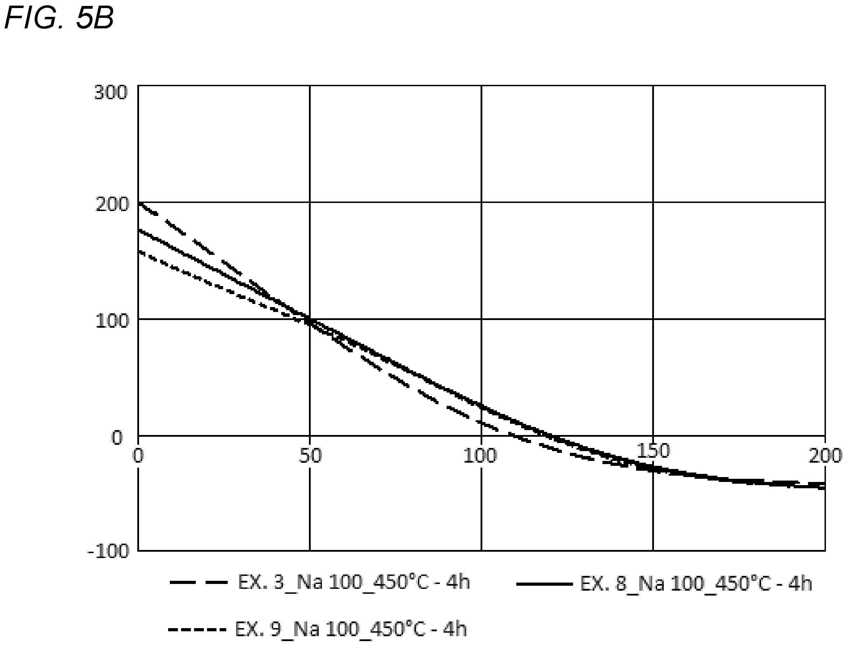

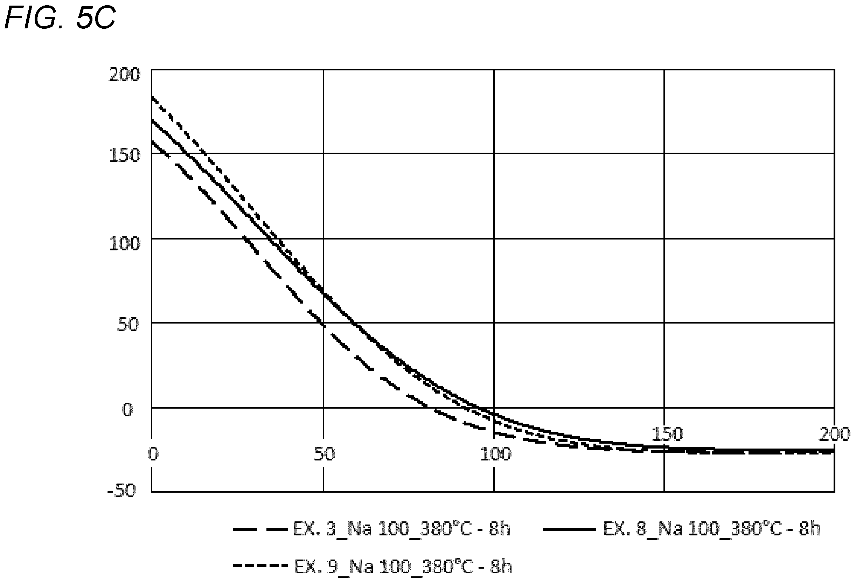

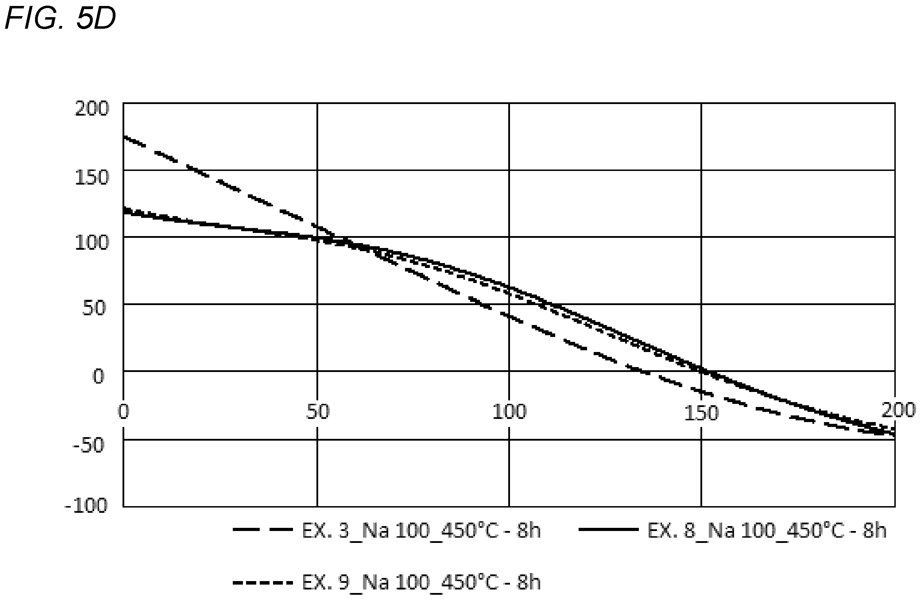

The glass ceramics in Examples 3, 8, and 9 were subjected to a chemical strengthening treatment under different conditions, and the results were compared. The results are shown in FIG. 5A to FIG. 5D. FIG. 5A is a diagram showing a stress profile when each glass ceramic is immersed in a salt containing 100% sodium nitrate at 380°C for 4 hours. FIG. 5B is a diagram showing a stress profile when each glass ceramic is immersed in a salt containing 100% sodium nitrate at 450°C for 4 hours. FIG. 5C is a diagram showing a stress profile when each glass ceramic is immersed in a salt containing 100% sodium nitrate at 380°C for 8 hours. FIG. 5D is a diagram showing a stress profile when each glass ceramic is immersed in a salt containing 100% sodium nitrate at 450°C for 8 hours. Note that, the stress profile was measured by using a scattered light photoelastic stress meter (SLP-1000 manufactured by Orihara Industrial Co., Ltd.). In each stress profile in FIG. 5A to FIG. 5D, the horizontal axis represents the depth ($\mu$m) from the surface, and the vertical axis represents the compressive stress value (MPa).

As seen from the results in FIG. 5A to FIG. 5D, the glass ceramics in Examples 3, 8, and 9, which are Inventive Examples, can provide excellent strength by chemical strengthening. It can also be seen that in the 380°C treatment, the magnitude of the compressive stress due to the composition tends to be maintained even when the treatment time is extended, and in the 450°C treatment, the surface tends to relax along with the treatment time, but the DOL tends to increase.

As described above, the following matters are disclosed in the present description.

1. A glass ceramic including:

at least one of a lithium disilicate type crystal and a solid solution crystal thereof;
at least one of a virgilite type crystal and a solid solution crystal thereof; and
a residual glass phase, in which
a fracture toughness value $K_{IC}$ is 1.0 MPa·m$^{0.5}$ or more, and
a haze value in terms of a thickness of 0.7 mm is 0.8% or less.

2. A glass ceramic including:

at least one of a lithium disilicate type crystal and a solid solution crystal thereof;
at least one of a β-spodumene type crystal and a solid solution crystal thereof; and
a residual glass phase, in which
a fracture toughness value $K_{IC}$ is 1.2 MPa·m$^{0.5}$ or more, and
a haze value in terms of a thickness of 0.7 mm is 2.0% or less.

3. The glass ceramic according to the above 1 or 2, in which

when a $K_I$-v curve showing a relationship between a stress intensity factor $K_I$ (unit: MPa·m$^{0.5}$) and a crack growth rate v (unit: m/s) of the glass ceramic is measured,
the $K_I$-v curve has Region I, Region II, and Region III from a region where the crack growth rate v is small,
the $K_I$-v curve has an inflection point in the Region III, and
when the crack growth rate v is fitted to the stress intensity factor $K_I$ using an exponential function, a ratio (x_Region III-2/x_region III-1) of an exponent value (x_Region III-2) of the exponential function on a side of Region III-2 to an exponent value (x_Region III-1) of the exponential function on a side of Region III-1 is less than 0.25,
provided that the Region III-1 is a region where the crack growth rate v is smaller and the Region III-2 is a region where the crack growth rate v is larger in the Region III with the inflection point as a boundary.

4. A chemically strengthened glass including a compressive stress layer at a surface thereof, in which the chemically strengthened glass is the glass ceramic according to the above 3.

5. The glass ceramic according to any one of the above 1 to 3, in which

a composition of a base glass includes, in mol% in terms of oxides,

65% to 75% of $SiO_2$,
23% to 25% of $Li_2O$,
4% to 8% of $Al_2O_3$,
0.5% to 2.5% of $P_2O_5$,
0.6% to 2% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 5% or less with respect to a sum of molar proportions of $Li_2O$, $Al_2O_3$ and $SiO_2$.

6. The glass ceramic according to any one of the above 1 to 3 and 5, in which

a composition of a base glass includes, in mol% in terms of oxides,

65% to 75% of $SiO_2$,
23% to 25% of $Li_2O$,
4% to 8% of $Al_2O_3$,
0.7% to 2.5% of $P_2O_5$,
0.6% to 1.1% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 4% or less with respect to a sum of molar proportions of $Li_2O$, $Al_2O_3$ and $SiO_2$.

7. The glass ceramic according to any one of the above 1 to 3, 5, and 6, in which the composition of the base glass is substantially free of $B_2O_3$, in mol% in terms of oxides.

8. A chemically strengthened glass including a compressive stress layer at a surface thereof, in which

a surface compressive stress value CS is 150 MPa or more,
the chemically strengthened glass includes at least one of a lithium disilicate type crystal and a solid solution crystal thereof, at least one of a virgilite type crystal and a solid solution crystal thereof, and a residual glass phase,
a fracture toughness value $K_{IC}$ is 1.0 MPa·m$^{0.5}$ or more,
a haze value in terms of a thickness of 0.7 mm is 0.8% or less, and
the chemically strengthened glass is a glass ceramic.

9. A chemically strengthened glass including a compressive stress layer at a surface thereof, in which

a surface compressive stress value CS is 100 MPa or more,
the chemically strengthened glass includes at least one of a lithium disilicate type crystal and a solid solution crystal thereof, at least one of a β-spodumene type crystal and a solid solution crystal thereof, and a residual glass phase,
a fracture toughness value $K_{IC}$ is 1.2 MPa·m$^{0.5}$ or more,
a haze value in terms of a thickness of 0.7 mm is 2.0% or less, and
the chemically strengthened glass is a glass ceramic.

10. The chemically strengthened glass according to the above 8 or 9, in which

a base composition of the chemically strengthened glass includes, in mol% in terms of oxides,

65% to 75% of $SiO_2$,

23% to 25% of $Li_2O$,
4% to 8% of $Al_2O_3$,
0.5% to 2.5% of $P_2O_5$,
0.6% to 2% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 5% or less with respect to a sum of molar proportions of $Li_2O$, $Al_2O_3$ and $SiO_2$.

11. A method for producing the glass ceramic according to any one of the above 1 to 3 and 5 to 7, the method including:

performing a heat treatment on an amorphous glass including, in mol% in terms of oxides, 65% to 75% of $SiO_2$, 23% to 25% of $Li_2O$, 4% to 8% of $Al_2O_3$, 0.5% to 2.5% of $P_2O_5$, 0.6% to 2% of $ZrO_2$, 0% to 1% of $B_2O_3$, 0% to 1.5% of $Na_2O$, 0% to 1% of $K_2O$, 0% to 1% of ZnO, and 0% to 1% of $SnO_2$, and having a sum of molar proportions of $P_2O_5$, $ZrO_2$, $B_2O_3$, $Na_2O$, $K_2O$, ZnO, and $SnO_2$ of 5% or less with respect to a sum of molar proportions of $Li_2O$, $Al_2O_3$ and $SiO_2$, in which
the heat treatment includes a plurality of stages of heat treatment,
the plurality of stages of heat treatment include a first stage of heat treatment at 500°C to 540°C for 10 minutes to 24 hours, and a final stage of heat treatment at 700°C or higher and lower than 850°C for 2 hours to 8 hours or at 830°C to 860°C for 10 minutes to 60 minutes, and
a temperature increase rate and a temperature decrease rate in each stage of heat treatment are 5°C/min to 120°C/min.

12. A method for producing the glass ceramic according to any one of the above 1 to 3 and 5 to 7, the method including:

performing a heat treatment on an amorphous glass including, in mol% in terms of oxides, 65% to 75% of $SiO_2$, 23% to 25% of $Li_2O$, 4% to 8% of $Al_2O_3$, 0.5% to 2.5% of $P_2O_5$, 0.6% to 2% of $ZrO_2$, 0% to 1% of $B_2O_3$, 0% to 1.5% of $Na_2O$, 0% to 1% of $K_2O$, 0% to 1% of ZnO, and 0% to 1% of $SnO_2$, and having a sum of molar proportions of $P_2O_5$, $ZrO_2$, $B_2O_3$, $Na_2O$, $K_2O$, ZnO, and $SnO_2$ of 5% or less with respect to a sum of molar proportions of $Li_2O$, $Al_2O_3$ and $SiO_2$, in which
the heat treatment includes a plurality of stages of heat treatment,
the plurality of stages of heat treatment include a first stage of heat treatment at 500°C to 540°C for 10 minutes to 24 hours, and a final stage of heat treatment at 730°C or higher and lower than 800°C for 2 hours to 8 hours or at 830°C to 860°C for 10 minutes to 60 minutes, and
a temperature increase rate and a temperature decrease rate in each stage of heat treatment are 5°C/min to 120°C/min.

13. A glass ceramic including a crystal, in which

when a $K_I$-v curve showing a relationship between a stress intensity factor $K_I$ (unit: $MPa·m^{0.5}$) and a crack growth rate v (unit: m/s) of the glass ceramic is measured,
the $K_I$-v curve has Region I, Region II, and Region III from a region where the crack growth rate v is small,
the $K_I$-v curve has an inflection point in the Region III, and
when the crack growth rate v is fitted to the stress intensity factor $K_I$ using an exponential function, a ratio (x_Region III-2/x_region III-1) of an exponent value (x_Region III-2) of the exponential function on a side of Region III-2 to an exponent value (x_Region III-1) of the exponential function on a side of Region III-1 is less than 0.25,
provided that the Region III-1 is a region where the crack growth rate v is smaller and the Region III-2 is a region where the crack growth rate v is larger in the Region III with the inflection point as a boundary.

14. The glass ceramic according to the above 13, in which

a composition of a base glass includes, in mol% in terms of oxides,

65% to 75% of $SiO_2$,
23% to 25% of $Li_2O$,
4% to 8% of $Al_2O_3$,
0.5% to 2.5% of $P_2O_5$,
0.6% to 2% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 5% or less with respect to a sum of molar proportions of $Li_2O$, $Al_2O_3$ and $SiO_2$.

15. The glass ceramic according to the above 13 or 14, in which

a composition of a base glass includes, in mol% in terms of oxides,

65% to 75% of $SiO_2$,
23% to 25% of $Li_2O$,
4% to 8% of $Al_2O_3$,
0.7% to 2.5% of $P_2O_5$,
0.6% to 1.1% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 4% or less with respect to a sum of molar proportions of $Li_2O$, $Al_2O_3$ and $SiO_2$.

16. The glass ceramic according to any one of the above 13 to 15, in which the composition of the base glass is substantially free of $B_2O_3$, in mol% in terms of oxides.
17. A chemically strengthened glass including a compressive stress layer at a surface thereof, in which the chemically strengthened glass is the glass ceramic according to any one of the above 13 to 16.
18. A glass ceramic, in which

in a case where a $K_I$-v curve showing a relationship between a stress intensity factor $K_I$ (unit: MPa·m$^{0.5}$) and a crack growth rate v (unit: m/s) of the glass ceramic is measured,
when the crack growth rate v between $1 \times 10^{-4}$ m/s and $1 \times 10^{-1}$ m/s is fitted to $K_I$ using an exponential function having e as a base, a coefficient value for the stress intensity factor in an exponent is less than 130 (MPa$^{-1}$·m$^{-0.5}$), and
a haze value in terms of a thickness of 0.7 mm is less than 2.0%.

19. A chemically strengthened glass including a compressive stress layer at a surface thereof, in which the chemically strengthened glass is the glass ceramic according to the above 18.
20. The glass ceramic according to the above 18 or 19, in which

a composition of a base glass includes, in mol% in terms of oxides,

65% to 75% of $SiO_2$,
23% to 25% of $Li_2O$,
4% to 8% of $Al_2O_3$,
0.5% to 2.5% of $P_2O_5$,
0.6% to 2% of $ZrO_2$,
0% to 1% of $B_2O_3$,
0% to 1.5% of $Na_2O$,

0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 5% or less with respect to a sum of molar proportions of $Li_2O$, $Al_2O_3$ and $SiO_2$.

21. The glass ceramic according to any one of the above 18 to 20, in which

a composition of a base glass includes, in mol% in terms of oxides,

65% to 75% of $SiO_2$,
23% to 25% of $Li_2O$,
4% to 8% of $Al_2O_3$,
0.7% to 2.5% of $P_2O_5$,
0.6% to 1.1% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 4% or less with respect to a sum of molar proportions of $Li_2O$, $Al_2O_3$ and $SiO_2$.

22. The glass ceramic according to any one of the above 18 to 21, in which the composition of the base glass is substantially free of $B_2O_3$, in mol% in terms of oxides.

Although the present invention has been described in detail with reference to specific embodiments, it is apparent to those skilled in the art that various changes and modifications can be made without departing from the spirit and scope of the present invention. Note that, the present application is based on a Japanese patent application (Japanese Patent Application No. 2022-106563) filed on June 30, 2022, the entire contents of which are incorporated herein by reference. In addition, all references cited here are entirely incorporated.

**Claims**

1.  A glass ceramic comprising:

    at least one of a lithium disilicate type crystal and a solid solution crystal thereof;
    at least one of a virgilite type crystal and a solid solution crystal thereof; and
    a residual glass phase, wherein
    a fracture toughness value $K_{IC}$ is 1.0 MPa·$m^{0.5}$ or more, and
    a haze value in terms of a thickness of 0.7 mm is 0.8% or less.

2.  A glass ceramic comprising:

    at least one of a lithium disilicate type crystal and a solid solution crystal thereof;
    at least one of a β-spodumene type crystal and a solid solution crystal thereof; and
    a residual glass phase, wherein
    a fracture toughness value $K_{IC}$ is 1.2 MPa·$m^{0.5}$ or more, and
    a haze value in terms of a thickness of 0.7 mm is 2.0% or less.

3.  The glass ceramic according to claim 1 or 2, wherein

    when a $K_I$-v curve showing a relationship between a stress intensity factor $K_I$ (unit: MPa·$m^{0.5}$) and a crack growth rate v (unit: m/s) of the glass ceramic is measured,
    the $K_I$-v curve has Region I, Region II, and Region III from a region where the crack growth rate v is small,

the $K_I$-v curve has an inflection point in the Region III, and

when the crack growth rate v is fitted to the stress intensity factor $K_I$ using an exponential function, a ratio (x_Region III-2/x_region III-1) of an exponent value (x_Region III-2) of the exponential function on a side of Region III-2 to an exponent value (x_Region III-1) of the exponential function on a side of Region III-1 is less than 0.25,

provided that the Region III-1 is a region where the crack growth rate v is smaller and the Region III-2 is a region where the crack growth rate v is larger in the Region III with the inflection point as a boundary.

4. A chemically strengthened glass comprising a compressive stress layer at a surface thereof, wherein the chemically strengthened glass is the glass ceramic according to claim 3.

5. The glass ceramic according to claim 1 or 2, wherein

a composition of a base glass comprises, in mol% in terms of oxides,

65% to 75% of $SiO_2$,
23% to 25% of $Li_2O$,
4% to 8% of $Al_2O_3$,
0.5% to 2.5% of $P_2O_5$,
0.6% to 2% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 5% or less with respect to a sum of molar proportions of $Li_2O$, $Al_2O_3$ and $SiO_2$.

6. The glass ceramic according to claim 1 or 2, wherein

a composition of a base glass comprises, in mol% in terms of oxides,

65% to 75% of $SiO_2$,
23% to 25% of $Li_2O$,
4% to 8% of $Al_2O_3$,
0.7% to 2.5% of $P_2O_5$,
0.6% to 1.1% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 4% or less with respect to a sum of molar proportions of $Li_2O$, $Al_2O_3$ and $SiO_2$.

7. The glass ceramic according to claim 6, wherein the composition of the base glass is substantially free of $B_2O_3$, in mol% in terms of oxides.

8. A chemically strengthened glass comprising a compressive stress layer at a surface thereof, wherein

a surface compressive stress value CS is 150 MPa or more,
the chemically strengthened glass comprises at least one of a lithium disilicate type crystal and a solid solution crystal thereof, at least one of a virgilite type crystal and a solid solution crystal thereof, and a residual glass phase,
a fracture toughness value $K_{IC}$ is 1.0 MPa·m$^{0.5}$ or more,
a haze value in terms of a thickness of 0.7 mm is 0.8% or less, and
the chemically strengthened glass is a glass ceramic.

9. A chemically strengthened glass comprising a compressive stress layer at a surface thereof, wherein

a surface compressive stress value CS is 100 MPa or more,
the chemically strengthened glass comprises at least one of a lithium disilicate type crystal and a solid solution crystal thereof, at least one of a β-spodumene type crystal and a solid solution crystal thereof, and a residual glass phase,
a fracture toughness value $K_{IC}$ is 1.2 MPa·m$^{0.5}$ or more,
a haze value in terms of a thickness of 0.7 mm is 2.0% or less, and
the chemically strengthened glass is a glass ceramic.

10. The chemically strengthened glass according to claim 8 or 9, wherein

a base composition of the chemically strengthened glass comprises, in mol% in terms of oxides,

65% to 75% of $SiO_2$,
23% to 25% of $Li_2O$,
4% to 8% of $Al_2O_3$,
0.5% to 2.5% of $P_2O_5$,
0.6% to 2% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 5% or less with respect to a sum of molar proportions of $Li_2O$, $Al_2O_3$ and $SiO_2$.

11. A method for producing the glass ceramic according to claim 1 or 2, the method comprising:

performing a heat treatment on an amorphous glass comprising, in mol% in terms of oxides, 65% to 75% of $SiO_2$, 23% to 25% of $Li_2O$, 4% to 8% of $Al_2O_3$, 0.5% to 2.5% of $P_2O_5$, 0.6% to 2% of $ZrO_2$, 0% to 1% of $B_2O_3$, 0% to 1.5% of $Na_2O$, 0% to 1% of $K_2O$, 0% to 1% of ZnO, and 0% to 1% of $SnO_2$, and having a sum of molar proportions of $P_2O_5$, $ZrO_2$, $B_2O_3$, $Na_2O$, $K_2O$, ZnO, and $SnO_2$ of 5% or less with respect to a sum of molar proportions of $Li_2O$, $Al_2O_3$ and $SiO_2$, wherein
the heat treatment includes a plurality of stages of heat treatment,
the plurality of stages of heat treatment include a first stage of heat treatment at 500°C to 540°C for 10 minutes to 24 hours, and a final stage of heat treatment at 700°C or higher and lower than 850°C for 2 hours to 8 hours or at 830°C to 860°C for 10 minutes to 60 minutes, and
a temperature increase rate and a temperature decrease rate in each stage of heat treatment are 5°C/min to 120°C/min.

12. A method for producing the glass ceramic according to claim 1 or 2, the method comprising:

performing a heat treatment on an amorphous glass comprising, in mol% in terms of oxides, 65% to 75% of $SiO_2$, 23% to 25% of $Li_2O$, 4% to 8% of $Al_2O_3$, 0.5% to 2.5% of $P_2O_5$, 0.6% to 2% of $ZrO_2$, 0% to 1% of $B_2O_3$, 0% to 1.5% of $Na_2O$, 0% to 1% of $K_2O$, 0% to 1% of ZnO, and 0% to 1% of $SnO_2$, and having a sum of molar proportions of $P_2O_5$, $ZrO_2$, $B_2O_3$, $Na_2O$, $K_2O$, ZnO, and $SnO_2$ of 5% or less with respect to a sum of molar proportions of $Li_2O$, $Al_2O_3$ and $SiO_2$, wherein
the heat treatment includes a plurality of stages of heat treatment,
the plurality of stages of heat treatment include a first stage of heat treatment at 500°C to 540°C for 10 minutes to 24 hours, and a final stage of heat treatment at 730°C or higher and lower than 800°C for 2 hours to 8 hours or at 830°C to 860°C for 10 minutes to 60 minutes, and
a temperature increase rate and a temperature decrease rate in each stage of heat treatment are 5°C/min to 120°C/min.

13. A glass ceramic comprising a crystal, wherein

when a $K_I$-v curve showing a relationship between a stress intensity factor $K_I$ (unit: MPa·m$^{0.5}$) and a crack growth rate v (unit: m/s) of the glass ceramic is measured,

the $K_I$-v curve has Region I, Region II, and Region III from a region where the crack growth rate v is small, the $K_I$-v curve has an inflection point in the Region III, and

when the crack growth rate v is fitted to the stress intensity factor $K_I$ using an exponential function, a ratio (x_Region III-2/x_region III-1) of an exponent value (x_Region III-2) of the exponential function on a side of Region III-2 to an exponent value (x_Region III-1) of the exponential function on a side of Region III-1 is less than 0.25,

provided that the Region III-1 is a region where the crack growth rate v is smaller and the Region III-2 is a region where the crack growth rate v is larger in the Region III with the inflection point as a boundary.

14. The glass ceramic according to claim 13, wherein

a composition of a base glass comprises, in mol% in terms of oxides,

65% to 75% of $SiO_2$,
23% to 25% of $Li_2O$,
4% to 8% of $Al_2O_3$,
0.5% to 2.5% of $P_2O_5$,
0.6% to 2% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 5% or less with respect to a sum of molar proportions of $Li_2O$, $Al_2O_3$ and $SiO_2$.

15. The glass ceramic according to claim 13, wherein

a composition of a base glass comprises, in mol% in terms of oxides,

65% to 75% of $SiO_2$,
23% to 25% of $Li_2O$,
4% to 8% of $Al_2O_3$,
0.7% to 2.5% of $P_2O_5$,
0.6% to 1.1% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 4% or less with respect to a sum of molar proportions of $Li_2O$, $Al_2O_3$ and $SiO_2$.

16. The glass ceramic according to claim 15, wherein the composition of the base glass is substantially free of $B_2O_3$, in mol% in terms of oxides.

17. A chemically strengthened glass comprising a compressive stress layer at a surface thereof, wherein the chemically strengthened glass is the glass ceramic according to any one of claims 13 to 16.

18. A glass ceramic, wherein

in a case where a $K_I$-v curve showing a relationship between a stress intensity factor $K_I$ (unit: MPa·m$^{0.5}$) and a crack growth rate v (unit: m/s) of the glass ceramic is measured,

when the crack growth rate v between $1 \times 10^{-4}$ m/s and $1 \times 10^{-1}$ m/s is fitted to $K_I$ using an exponential function having e as a base, a coefficient value for the stress intensity factor in an exponent is less than 130 $(\text{MPa}^{-1} \cdot \text{m}^{-0.5})$, and

a haze value in terms of a thickness of 0.7 mm is less than 2.0%.

19. A chemically strengthened glass comprising a compressive stress layer at a surface thereof, wherein the chemically strengthened glass is the glass ceramic according to claim 18.

20. The glass ceramic according to claim 18 or 19, wherein

a composition of a base glass comprises, in mol% in terms of oxides,

65% to 75% of $SiO_2$,
23% to 25% of $Li_2O$,
4% to 8% of $Al_2O_3$,
0.5% to 2.5% of $P_2O_5$,
0.6% to 2% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 5% or less with respect to a sum of molar proportions of $Li_2O$, $Al_2O_3$ and $SiO_2$.

21. The glass ceramic according to claim 18 or 19, wherein

a composition of a base glass comprises, in mol% in terms of oxides,

65% to 75% of $SiO_2$,
23% to 25% of $Li_2O$,
4% to 8% of $Al_2O_3$,
0.7% to 2.5% of $P_2O_5$,
0.6% to 1.1% of $ZrO_2$,
0% to 1% of $B_2O_3$,
0% to 1.5% of $Na_2O$,
0% to 1% of $K_2O$,
0% to 1% of ZnO, and
0% to 1% of $SnO_2$, and

a sum of molar proportions of $P_2O_5$, $ZrO_2$, $B_2O_3$, $Na_2O$, $K_2O$, ZnO, and $SnO_2$ is 4% or less with respect to a sum of molar proportions of $Li_2O$, $Al_2O_3$ and $SiO_2$.

22. The glass ceramic according to claim 21, wherein the composition of the base glass is substantially free of $B_2O_3$, in mol% in terms of oxides.

## FIG. 1

Depth : d

Width : w

Crack Length

Length : L

Radius : L

## FIG. 2

FIG. 3

## FIG. 4

*FIG. 5A*

FIG. 5B

EX. 3_Na 100_450°C - 4h          — EX. 8_Na 100_450°C - 4h

---- EX. 9_Na 100_450°C - 4h

EP 4 549 411 A1

## FIG. 5D

EP 4 549 411 A1

## INTERNATIONAL SEARCH REPORT

| International application No. |
| --- |
| **PCT/JP2023/023677** |

| A. | CLASSIFICATION OF SUBJECT MATTER |
| --- | --- |

*C03C 10/12*(2006.01)i; *C03C 21/00*(2006.01)i
FI: C03C10/12; C03C21/00 101

According to International Patent Classification (IPC) or to both national classification and IPC

| B. | FIELDS SEARCHED |
| --- | --- |

Minimum documentation searched (classification system followed by classification symbols)

C03C1/00-14/00; C03C21/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

INTERGLAD

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2021-531229 A (CORNING INCORPORATED) 18 November 2021 (2021-11-18) claims, paragraphs [0188]-[0189], [0359]-[0360], [0364], [0386]-[0387], table 7, samples 18, 21, 23-28, 30-33, 36-41, 53-54, 56-58 | 1, 3-4, 8, 13, 17-19 |
| A | | 2, 5-7, 9-12, 14-16, 20-22 |
| X | WO 2019/022035 A1 (AGC INC) 31 January 2019 (2019-01-31) claims, paragraphs [0023], [0032], [0079]-[0100], tables 4-6, example 14 | 2-4, 9, 13, 17-19 |
| A | | 1, 5-8, 10-12, 14-16, 20-22 |
| A | JP 2019-531241 A (DENTSPLY SIRONA INC.) 31 October 2019 (2019-10-31) entire text | 1-22 |
| A | JP 2014-515722 A (STRAUMANN HOLDING AG) 03 July 2014 (2014-07-03) entire text | 1-22 |
| A | JP 2016-529201 A (CORNING INCORPORATED) 23 September 2016 (2016-09-23) entire text | 1-22 |

☑ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 August 2023** | **22 August 2023** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

## INTERNATIONAL SEARCH REPORT

| International application No. |
| --- |
| **PCT/JP2023/023677** |

### C.    DOCUMENTS CONSIDERED TO BE RELEVANT

| Category* | Citation of document, with indication, where appropriate, of the relevant passages | Relevant to claim No. |
| --- | --- | --- |
| A | JP 2020-33202 A (AGC INC) 05 March 2020 (2020-03-05)<br>entire text | 1-22 |
| A | JP 2021-505503 A (CORNING INCORPORATED) 18 February 2021 (2021-02-18)<br>entire text | 1-22 |

Form PCT/ISA/210 (second sheet) (January 2015)

**INTERNATIONAL SEARCH REPORT**
Information on patent family members

International application No.

**PCT/JP2023/023677**

| Patent document cited in search report | | | Publication date (day/month/year) | Patent family member(s) | Publication date (day/month/year) |
|---|---|---|---|---|---|
| JP | 2021-531229 | A | 18 November 2021 | US 2020/0017398 A1 claims, paragraphs [0295]-[0296], [0481]-[0482], [0486], [0511], table 7, samples 18, 21, 23-28, 30-33, 36-41, 53-54, 56-58<br>WO 2020/018393 A1<br>EP 3694813 A1<br>CN 111417602 A<br>KR 10-2021-0032925 A | |
| WO | 2019/022035 | A1 | 31 January 2019 | US 2020/0207660 A1 claims, paragraphs [0047], [0066], [0141]-[0176], tables 4-6, example 14<br>CN 110958992 A<br>KR 10-2020-0035005 A | |
| JP | 2019-531241 | A | 31 October 2019 | US 2018/0099900 A1 entire text<br>WO 2018/065301 A1<br>EP 3523259 A1<br>CN 110139840 A | |
| JP | 2014-515722 | A | 03 July 2014 | US 2014/0141960 A1 entire text<br>WO 2012/143137 A1<br>EP 2699521 A1<br>CN 103476723 A<br>KR 10-2014-0005330 A | |
| JP | 2016-529201 | A | 23 September 2016 | US 2015/0274581 A1 entire text<br>WO 2015/034860 A1<br>EP 3041800 A1<br>CN 105683109 A<br>KR 10-2016-0048990 A | |
| JP | 2020-33202 | A | 05 March 2020 | (Family: none) | |
| JP | 2021-505503 | A | 18 February 2021 | US 2019/0161395 A1 entire text<br>WO 2019/108823 A1<br>EP 3717423 A1<br>CN 111615501 A<br>KR 10-2020-0087863 A | |

Form PCT/ISA/210 (patent family annex) (January 2015)

## REFERENCES CITED IN THE DESCRIPTION

**Patent documents cited in the description**

- JP 2021509658 A
- JP 2016529201 A

- JP 2022106563 A

**Non-patent literature cited in the description**

- *Acta metall. mater.*, 1995, vol. 43, 3453-3458
- Introduction to Fracture in Glass. New Glass magazine. Yoshida, September 2008

- Fatigue Crack Growth Properties of Hot Work Die Steels. *Yamada Toyota Lab R&D review*, December 1992, vol. 27